# EUROPÄISCHE PATENTSCHRIFT

(11) **EP 2 923 301 B1**
(45) Veröffentlichungstag und Bekanntmachung des Hinweises auf die Patenterteilung: **27.06.2018**
(21) Anmeldenummer: 13791786.0
(22) Anmeldetag: 12.11.2013
(51) Int. Cl.: G06K 9/00, G06T 13/40

(54) **VERFAHREN UND VORRICHTUNG ZUR REKONSTRUKTION EINER BEWEGUNG EINES OBJEKTS**
METHOD AND DEVICE FOR RECONSTRUCTING A MOTION OF AN OBJECT
PROCÉDÉ ET DISPOSITIF DE RECONSTITUTION D'UN MOUVEMENT D'UN OBJET

(30) Priorität: 22.11.2012 DE 102012111304
(43) Veröffentlichungstag der Anmeldung: 30.09.2015
(73) Patentinhaber: Fraunhofer-ges. zur Förderung der Angewandten Forschung E.V., 80686 München (DE)
(72) Erfinder: OTTO, Stephan, 90562 Heroldsberg (DE); BRETZ, Ingmar, 93128 Regenstauf (DE); FRANKE, Norbert, 91058 Erlangen (DE); VON DER GRÜN, Thomas, 91077 Kleinsendelbach (DE); MUTSCHLER, Christopher, 91054 Erlangen (DE)
(74) Vertreter: 2SPL Patentanwälte PartG mbB
(86) Internationale Anmeldenummer: PCT/EP2013/073558
(87) Internationale Veröffentlichungsnummer: WO 2014/079729

(56) Entgegenhaltungen:
- KILNER J ET AL: "Summarised hierarchical Markov models for speed-invariant action matching", 2009 IEEE 12TH INTERNATIONAL CONFERENCE ON COMPUTER VISION WORKSHOPS, ICCV WORKSHOPS : KYOTO, JAPAN, 27 SEPTEMBER - 4 OCTOBER 2009, INSTITUTE OF ELECTRICAL AND ELECTRONICS ENGINEERS, PISCATAWAY, NJ, 27. September 2009 (2009-09-27), Seiten 1065-1072, XP031664597, ISBN: 978-1-4244-4442-7
- SEHOON HA ET AL: "Human motion reconstruction from force sensors", COMPUTER ANIMATION, ACM, 2 PENN PLAZA, SUITE 701 NEW YORK NY 10121-0701 USA, 5. August 2011 (2011-08-05), Seiten 129-138, XP058007015, DOI: 10.1145/2019406.2019424 ISBN: 978-1-4503-0923-3
- GEHRIG D ET AL: "HMM-based human motion recognition with optical flow data", HUMANOID ROBOTS, 2009. HUMANOIDS 2009. 9TH IEEE-RAS INTERNATIONAL CONFERENCE ON, IEEE, PISCATAWAY, NJ, USA, 7. Dezember 2009 (2009-12-07), Seiten 425-430, XP031609225, ISBN: 978-1-4244-4597-4
- BOBICK A F ET AL: "THE RECOGNITION OF HUMAN MOVEMENT USING TEMPORAL TEMPLATES", PATTERN ANALYSIS AND MACHINE INTELLIGENCE, IEEE TRANSACTIONS ON, IEEE SERVICE CENTER, LOS ALAMITOS, CA, US, Bd. 23, Nr. 3, 1. März 2001 (2001-03-01), Seiten 257-267, XP001005771, ISSN: 0162-8828, DOI: 10.1109/34.910878
- TRAN THANG THANH ET AL: "Extraction of Discriminative Patterns from Skeleton Sequences for Human Action Recognition", COMPUTING AND COMMUNICATION TECHNOLOGIES, RESEARCH, INNOVATION, AND VISION FOR THE FUTURE (RIVF), 2012 IEEE RIVF INTERNATIONAL CONFERENCE ON, IEEE, 27. Februar 2012 (2012-02-27), Seiten 1-6, XP032138198, DOI: 10.1109/RIVF.2012.6169822 ISBN: 978-1-4673-0307-1
- QIN GU, JINGLIANG PENG, ZHIGANG DENG: "Compression of human motion capture data using motion pattern indexing", COMPUTER GRAPHICS FORUM, Bd. 28, Nr. 1, 2009, Seiten 1-12, XP002721589, Oxford, UK DOI: 10.1111/j.1467-8659.2008.01309
- HUIYU ZHOU ET AL: "Classification of Upper Limb Motion Trajectories Using Shape Features", IEEE TRANSACTIONS ON SYSTEMS, MAN, AND CYBERNETICS: PART C:APPLICATIONS AND REVIEWS, IEEE SERVICE CENTER, PISCATAWAY, NJ, US, Bd. 42, Nr. 6, 1. November 2012 (2012-11-01), Seiten 970-982, XP011483365, ISSN: 1094-6977, DOI: 10.1109/TSMCC.2011.2175380
- Wataru Takano ET AL: "Realtime Unsupervised Selftuning Segmentation of Behavioral Motion Patterns Based on Probabilistic Correlation and Its Application to Automatic Acquisition of Proto-Symbols", NIHON ROBOTTO GAKKAISHI - JOURNAL OF THE ROBOTICS SOCIETY OF JAPAN, vol. 27, no. 9, 1 January 2009 (2009-01-01), pages 1046-1057, XP055312041, JP ISSN: 0289-1824, DOI: 10.7210/jrsj.27.1046
- KULIC D ET AL: "Incremental learning of human behaviors using hierarchical hidden Markov models", INTELLIGENT ROBOTS AND SYSTEMS (IROS), 2010 IEEE/RSJ INTERNATIONAL CONFERENCE ON, IEEE, PISCATAWAY, NJ, USA, 18 October 2010 (2010-10-18), pages 4649-4655, XP031920501, DOI: 10.1109/IROS.2010.5650813 ISBN: 978-1-4244-6674-0
- OTT C ET AL: "Motion capture based human motion recognition and imitation by direct marker control", HUMANOID ROBOTS, 2008. HUMANOIDS 2008. 8TH IEEE-RAS INTERNATIONAL CONFERENCE ON, IEEE, PISCATAWAY, NJ, USA, 1 December 2008 (2008-12-01), pages 399-405, XP031825344, ISBN: 978-1-4244-2821-2

## Beschreibung

Ausführungsbeispiele der vorliegenden Erfindung betreffen Vorrichtungen, Verfahren und Computerprogramme zur Rekonstruktion einer Bewegung eines Objekts mithilfe von vorgefertigten bzw. vorab gespeicherten Bewegungssequenzen eines Computermodells des Objekts.

Bei zahlreichen Anwendungen erscheint es wünschenswert, zuverlässige Bewegungsrekonstruktionen zur Verfügung stellen zu können, wie z.B. zur Situations- und/oder Bewegungsanalyse bei Sportübertragungen. Beispielsweise besteht bei vielen Sportarten, wie z.B. Fußball, Handball, American Football, Basketball, Baseball, Boxen - um nur einige zu nennen - ein Bedarf, bestimmte Bewegungssituationen der Sportler und/oder eines Spielgeräts (wie z.B. einem Ball), in Echtzeit oder im Nachhinein (Post-Produktion) zu analysieren.

Derzeit werden dazu hauptsächlich optische, d.h. auf Kamerasystemen basierende Systeme eingesetzt, mit denen Bewegungssituationen von Interesse beispielsweise mittels Wiederholungen und Zeitlupeneinstellungen erneut wiedergegeben und analysiert werden können. Derartige Systeme stoßen in der Praxis aber regelmäßig an ihre Grenzen, so dass es immer wieder vorkommen kann, dass auch eine Zeitlupe keine ausreichende Aussagekraft hinsichtlich einer fraglichen Spielsituation und/oder eines fraglichen Bewegungsablaufs erlaubt. In manchen Situationen kann eine Bewegung und/oder eine Position eines Objekts aus einem bestimmten Blickwinkel, wie z.B. einem Blickwinkel einer Kamera, welche die Spielsituation eingefangen hat, nicht eindeutig erkannt werden, weil z.B. eine Sicht auf entscheidende Körperteile und/oder Spielgeräte durch andere Objekte verdeckt ist.

Da mit Sportveranstaltungen und deren Ausgang im professionellen Sport zumeist auch ein hoher finanzieller und/oder wirtschaftlicher Wert verbunden ist, sollten insbesondere solche Fehlentscheidungen vermieden werden, welche den Ausgang einer Sportveranstaltung dramatisch beeinflussen können. Prominente Beispiele dafür sind Elfmeterentscheidungen, Abseitsentscheidungen oder Torentscheidungen im Fußball. In anderen Sportarten gibt es vergleichbar wichtige Entscheidungen, welche basierend auf optischen Systemen oft nur unzureichend genau getroffen werden können.

Bekannte Konzepte zur Erkennung und Synthese von Bewegungsabläufen werden beispielsweise in Kilner J., J.-Y. Guillemaut, Hilton A.: "Summarised hierarchical Markov models for speed-invariant action matching", 2009 IEEE 12th International Conference on Computer Vision workshops, ICCV workshops : Kyoto, Japan, 27 September - 4 October 2009, oder BOBICK A. F., DAVIS J W.: "THE RECOGNITION OF HUMAN MOVEMENT USING TEMPORAL TEMPLATES", IEEE Transactions on Pattern Analysis and Machine Intelligence, March 2001, IEEE Computer Society, USA, oder Wataru Takano ET AL: "Realtime Unsupervised Selftuning Segmentation of Behavioral Motion Patterns Based on Probabilistic Correlation and Its Application to Automatic Acquisition of Proto-Symbols",NIHON ROBOTTO GAKKAISHI - JOURNAL OF THE ROBOTICS SOCIETY OF JAPAN, Bd. 27, Nr. 9, 1. Januar 2009 (2009-01-01), Seiten 1046-1057,JP ISSN: 0289-1824, DOI: 10.7210/jrsj.27.1046 beschrieben. Um unter Umständen spielentscheidende Entscheidungen sicherer und/oder zutreffendere bzw. vielschichtigere Aussagen über Bewegungsabläufe treffen zu können, besteht eine Aufgabe der vorliegenden Erfindung darin, gegenüber dem Stand der Technik verbesserte Auswerte- bzw. Analysemöglichkeiten von Bewegungssituationen zur Verfügung zu stellen.

Diese Aufgabe wird durch Verfahren und Vorrichtungen mit den Merkmalen der unabhängigen Patentansprüche gelöst.
Weitere vorteilhafte Ausgestaltungen und Weiterbildungen sind Gegenstand der abhängigen Patentansprüche.

Gemäß einem Grundgedanken bedienen sich Ausführungsbeispiele der vorliegenden Erfindung wenigstens einer Datenbank mit vorab gespeicherten Bewegungsabläufen bzw. Bewegungsmustersegmenten eines Computermodells, welche computerisiert mit danach erfassten realen Bewegungsabläufen bzw. Bewegungsmustersegmenten eines realen Objekts, wie z.B. einem Lebewesen, verglichen werden. Wird in den gespeicherten Bewegungsabläufen vermittels eines geeigneten Algorithmus ein zu der realen Bewegung passendes Bewegungsmuster des Computermodells des Objekts gefunden, kann die reale Bewegung des Objekts basierend auf dem gefundenen Bewegungsmuster des Computermodells virtuell rekonstruiert werden. Mit einer derartigen virtuellen Bewegungsrekonstruktion einer von einem Objekt, wie z.B. einem Mensch oder einem Tier, tatsächlich durchgeführten Bewegung kann also eine Art virtuelle Realität geschaffen werden, welche wesentlich flexiblere Betrachtungs- oder Analysemöglichkeiten bietet als sie mit herkömmlichen Systemen möglich sind. Das Schutzbereich der Erfindung ist durch den Ansprüchen begrenzt. Gemäß einem ersten Aspekt der vorliegenden Erfindung wird ein Verfahren zur Rekonstruktion einer realen Bewegung eines Objekts aus einer Sequenz von Bewegungsmustersegmenten eines Computermodells des Objekts nach Anspruch 1 vorgeschlagen. Dabei entspricht jedes Bewegungsmustersegment einem unterschiedlichen Zeitintervall bzw. -abschnitt der Bewegung. Ferner weist das Objekt, wie z.B. ein Lebewesen, insbesondere ein Mensch, wenigstens eine mit einem Sensor bzw. Positionsmarker gekoppelte bzw. versehene Stützstelle für eine Bewegungserfassung auf. Das Verfahren umfasst gemäß Ausführungsbeispielen folgende Schritte:
a) Erfassen eines realen Bewegungsübergangs zwischen einem Anfangsbewegungszustand und einem Endbewegungszustand des Objekts in einem Zeitintervall der realen Bewegung basierend auf von dem Sensor/Positionsmarker empfangenen Positionsdaten der wenigstens einen Stützstelle;
b) Auswählen zumindest eines zu dem realen Bewegungsübergang korrespondierenden Bewegungsmustersegments aus einer Mehrzahl von in einer Datenbank hinterlegten Bewegungsmustern des Computermodells, derart, dass das ausgewählte Bewegungsmustersegment mit einer ausreichenden (insbesondere höchsten) Wahrscheinlichkeit ausgehend von dem Anfangsbewegungszustand zu dem Endbewegungszustand für das Zeitintervall führt; und
c) Rekonstruieren eines virtuellen Abbilds der realen Bewegung des Objekts für das Zeitintervall unter Verwendung des Anfangsbewegungszustands und des ausgewählten Bewegungsmustersegments, und die weitere Details aus Anspruch 1.
Unter einer ausreichenden Wahrscheinlichkeit soll im Nachfolgenden eine Wahrscheinlichkeit oberhalb einer vorbestimmten Wahrscheinlichkeitsschwelle verstanden werden, die gegebenenfalls an Umgebungs- oder Übertragungsbedingungen angepasst werden kann. Bei manchen Ausführungsbeispielen ergeben sich beim Auswählen des wenigstens einen zum realen Bewegungsübergang korrespondierenden Bewegungsmustersegments ein oder mehrere potentielle Bewegungsmustersegmente mit unterschiedlichen Wahrscheinlichkeiten. Von diesen potentiellen Bewegungsmustersegmenten kann dann bei manchen Ausführungsbeispielen jenes ausgewählt werden, das mit der höchsten Wahrscheinlichkeit ausgehend von dem Anfangsbewegungszustand zu dem Endbewegungszustand für das betrachtete Zeitintervall führt. Bei einer endlichen Anzahl von möglichen Bewegungszuständen und Bewegungsübergangen des Computermodells wird es stets wenigstens ein Bewegungsmustersegment geben, das, verglichen mit anderen, mit der höchsten Wahrscheinlichkeit ausgehend von dem Anfangsbewegungszustand zu dem Endbewegungszustand für das betrachtete Zeitintervall führt.

Bei dem Verfahren kann es sich gemäß einiger Ausführungsbeispiele um ein iteratives und vorzugsweise um ein computerimplementiertes Verfahren handeln, welches vermittels einer entsprechend programmierten Hardwarekomponente, wie z.B. einem Prozessor oder einer integrierten Schaltung, ausgeführt werden kann, wenn ein das Verfahren verwirklichendes Computerprogramm darauf ausgeführt wird bzw. abläuft. Die oben aufgezählten Verfahrensschritte a) bis c) können also eine aktuelle Iteration eines iterativen Verfahrens zur Rekonstruktion der Bewegung bilden. Der Anfangsbewegungszustand für die aktuelle Iteration kann dabei in einer vorhergehenden Iteration des iterativen Verfahrens rekonstruiert bzw. errechnet worden sein, so dass sich das rekonstruierte Abbild der Bewegung insgesamt aus einer Mehrzahl von ausgewählten und aufeinanderfolgenden Zeitintervallen/Iterationen entsprechenden Bewegungsmustersegmenten zusammensetzen kann. Beim Auswählen kann dabei ein erfasster bzw. detektierter realer Bewegungsübergang des Objekts iterativ mit den hinterlegten Bewegungsmustern des Computermodells verglichen werden, so dass eine Hypothese für einen aktuellen Bewegungszustand des Objekts basierend auf wenigstens einem vergangenen Bewegungszustand des Objekts und einer aktuellen Übergangswahrscheinlichkeit, die einem möglichen Bewegungsübergang zwischen wenigstens zwei zeitlich aufeinander folgenden diskreten Bewegungszuständen des Objekts entspricht, ermittelt wird. Dabei können ein aktueller Bewegungszustand und der wenigstens eine vergangene Bewegungszustand des Objekts eine Sequenz eines Markov-Models bilden, d.h., die verschiedenen Bewegungszustände und - übergänge können gemäß manchen Ausführungsbeispielen durch eine diskrete Markov-Kette modelliert werden. Bei derartigen Ausführungsformen kann vermittels des Auswählens des wenigstens einen Bewegungsmustersegments die wahrscheinlichste Sequenz von Bewegungszuständen bei einem vorbestimmten Markov-Model und einer erfassten (und möglicherweise verrauschten) Sequenz von Bewegungsübergängen ermittelt werden, um die reale Bewegung des Objekts zu rekonstruieren.

Eine entsprechend programmierte oder eingerichtete Hardware zur Durchführung des Verfahrens kann gemäß einem weiteren Aspekt der vorliegenden Erfindung als eine Vorrichtung zur Rekonstruktion einer realen Bewegung eines Objekts aus einer Sequenz von Bewegungsmustersegmenten eines Computermodells des Objekts betrachtet werden, wobei jedes Bewegungsmustersegment einem unterschiedlichen Zeitintervall der Bewegung entspricht, und wobei das Objekt wenigstens eine mit einem Sensor/Positionsmarker gekoppelte bzw. versehene Stützstelle aufweist. Die Vorrichtung umfasst dabei eine Einrichtung zum Erfassen bzw. Detektieren eines (realen) Bewegungsübergangs zwischen einem Anfangsbewegungszustand und einem Endbewegungszustand des Objekts in einem Zeitintervall der Bewegung basierend auf von dem Positionsmarker empfangenen Positionsdaten der wenigstens einen Stützstelle. Ferner umfasst die Vorrichtung eine Einrichtung zum Auswählen zumindest eines zu dem Bewegungsübergang korrespondierenden Bewegungsmustersegments aus einer Mehrzahl von in einer Datenbank hinterlegten Bewegungsmustern des Computermodells, wobei das ausgewählte Bewegungsmustersegment mit einer ausreichenden Wahrscheinlichkeit ausgehend von dem Anfangsbewegungszustand zu dem Endbewegungszustand für das Zeitintervall führt. Außerdem ist eine Einrichtung zum Rekonstruieren eines Abbilds der Bewegung des Objekts für das Zeitintervall unter Verwendung des Anfangsbewegungszustands und des ausgewählten Bewegungsmustersegments vorgesehen. Die einzelnen Einrichtungen können gemäß Ausführungsbeispielen jeweils als elektronische Schaltungsteile der Vorrichtung verstanden werden.

Bei dem Objekt, dessen Bewegung rekonstruiert werden soll, kann es sich insbesondere um ein vielgliedriges Objekt handeln, bei welchem einzelne Glieder durch gelenkartige Abschnitte getrennt und zueinander beweglich sind. Unter ein derartiges Objekt können also beispielsweise Menschen, Tiere, aber auch mechanische Konstruktionen subsumiert werden. Auch Sportgeräte, wie beispielsweise Bälle oder Schläger sind denkbar. Um Positionsdaten einzelner Objektteile ermitteln zu können, werden Stützstellen an dem Objekt bzw. an den einzelnen Objektteilen, also z.B. Gelenke und/oder Glieder, jeweils mit Sensoren versehen. Dabei kann es sich gemäß manchen Ausführungsbeispielen um funkbasierte Sensoren bzw. Positionsmarker eines Echtzeit-Lokalisierungssystems (RTLS = Real-Time Locating System) handeln, welches die geografischen Positionen bzw. Koordinaten (z.B. x-, y-, z- Koordinaten) der Sensoren bzw. Funkmarker in Echtzeit ermitteln kann. Die Einrichtung zum Erfassen des realen Bewegungsübergangs kann also gemäß manchen Ausführungsbeispielen angepasst sein, um die reale Bewegung bzw. den realen Bewegungsübergang des Objekts in Echtzeit zu erfassen. Dabei meint "Echtzeit" eine Anforderung, dass ein Ergebnis, z.B. gelieferte oder berechnete Koordinaten, innerhalb eines vorher fest definierten Zeitintervalls garantiert ermittelt wird, also vor einer bestimmten Zeitschranke vorliegt. Ein Echtzeitsystem sollte also nicht nur ein Mess- oder Berechnungsergebnis mit dem richtigen Wert, sondern dasselbe auch noch rechtzeitig liefern, z.B. innerhalb einem Bruchteil einer Sekunde.

Ein Sensor bzw. Positionsmarker kann also gemäß Ausführungsbeispielen einen aktiven Funksender aufweisen, der an einer zu lokalisierenden Stützstelle des Objekts angebracht wird und andauernd oder regelmäßig Funksignale zur Positionsbestimmung an einen Funkempfänger der Einrichtung zum Erfassen des Bewegungsübergangs überträgt. Der Positionsmarker kann beliebig viele weitere Sensorik enthalten, wie z.B. Beschleunigung, Kompass, Orientierung, Gyroskope, Barometer, etc. Der Empfänger kann beispielsweise auf Basis von Winkel- und Laufzeitmessungen die zur Positionsberechnung eines Senders erforderlichen Telemetriedaten, wie z.B. Koordinaten, Geschwindigkeitsdaten, Beschleunigungsdaten, etc., erfassen. Dabei sind prinzipiell nahezu beliebige Funkfrequenzen möglich, wie z.B. die der ISM-Bänder (ISM = Industrial, Scientific and Medical). Gemäß einem Ausführungsbeispiel kann eine Trägerfrequenz z.B. bei 2.4 GHz liegen. Ein zeitlicher Abstand zwischen aufeinanderfolgenden Telemetriedatensamples kann an die Geschwindigkeit und/oder Genauigkeit der zu erfassenden Bewegung angepasst werden. So sind beispielsweise Updateraten der gefunkten Telemetriedaten von wenigen Hz bis zu einigen kHz denkbar.

Ein Vorteil eines funkbasierten Lokalisierungssystems gegenüber optischen Systemen ist insbesondere darin zu sehen, dass es zu keinen optischen Abschattungen von Bewegungs- oder Spielsituationen kommen kann. Per Funk über- bzw. ermittelte Positionsdaten erlauben eine Rekonstruktion der Objektbewegung aus jedweder Perspektive, was bei optischen Signalen, wie eingangs bereits beschrieben, nicht immer möglich ist. Nach einer Bewegungsrekonstruktion kann die rekonstruierte Bewegung virtuell aus jeder Perspektive betrachtet werden.

In der Datenbank bzw. einem elektronischen Speicher befinden sich vorab erstellte Bewegungsmuster bzw. Bewegungsmustersegmente des Computermodells, welche möglichen realen Bewegungen bzw. Bewegungsabschnitten des Objekts entsprechen und mittels fortlaufender Positionen bzw. Koordinaten von Stützstellen des Computermodells definiert werden. Die Stützstellen des Computermodells können im Wesentlichen denen des realen Objekts entsprechen. Ein Bewegungsmustersegment umfasst dabei wenigstens ein Einzelbild (Frame), vorzugsweise aber eine Mehrzahl von Einzelbildern (Frames) einer Bewegung des Computermodells. Die vordefinierten Bewegungsmuster bzw. Bewegungsmustersegmente können vorab bzw. initial beispielsweise mittels bekannter Bewegungserfassungsverfahren (Motion Capture) erstellt werden, wobei z.B. menschliche Bewegungen auf ein im Computer generiertes 3D-Modell übertragen werden. Die in der Datenbank hinterlegten Bewegungsmuster können also vordefinierte dreidimensionale Bewegungsmuster eines dreidimensionalen Computermodells sein, welche möglichen realen Bewegungen des Objekts entsprechen.

Bei den aufgezeichneten bzw. modellierten Bewegungen kann es sich insbesondere um nachher bei der Bewegungsrekonstruktion besonders interessierende Bewegungen handeln, wie z.B. bestimmte Schlagkombinationen eines Boxers oder bestimmte Bewegungsabläufe eines Fußballspielers. Bei der initialen Bewegungsmustererstellung im Rahmen einer Pre-Produktion können Sensoren bzw. Marker an den gleichen Stützstellen, wie z.B. an Gelenken oder bestimmten Körperpositionen, angebracht werden, wie zur späteren Bewegungsrekonstruktion. Zur initialen Bewegungsmustererstellung können auch nicht-funkbasierte Lokalisierungsverfahren, wie z.B. optische Verfahren, eingesetzt werden. Beim einem optischen Tracking kann mit Kameras gearbeitet werden, welche aktive (also ein Signal emittierende) oder passive Positionsmarker an zu erfassenden Personen oder Gegenständen verfolgen. Anhand der Markerbewegungen in den einzelnen Kamerabildern (Frames) kann mittels Triangulation die Position der Marker in 3D berechnet werden. Darüber hinaus ist durch eine Mustererkennung in der Bildverarbeitung auch ein markerloses Bewegungserfassungsverfahren möglich. Nach einer Digitalisierung können die bei der Pre-Produktion erfassten Bewegungsrohdaten in ein 3D-Computermodell importiert und dort weiterbearbeitet werden. Sie können dabei auf ein virtuelles Skelett (eine Art dreidimensionales Strichmännchen) übertragen werden. Dieses Skelett kann wiederum mit einem Drahtgittermodell verknüpft sein, welches die aufgezeichneten Bewegungen als digitales Bewegungsmuster bzw. Bewegungsmustersegment nachstellt. Nach einer Bildsynthese bzw. dem Rendern sieht es für einen Betrachter aus, als würde die virtuelle Figur bzw. das Computermodell die Bewegungen der ursprünglichen Personen oder des ursprünglichen Gegenstands ausführen.

Ein so vorab aufgezeichnetes digitales Bewegungsmuster bzw. Bewegungsmustersegment kann dann in der Datenbank evtl. normiert auf eine Einheitsgröße abgespeichert werden. Ein gespeichertes Bewegungsmustersegment kann dabei auch zu mehr als einem Bewegungsmuster gehören. D.h., ein digitales Bewegungsmuster kann aus einer Mehrzahl von digitalen Bewegungsmustersegmenten zusammengesetzt werden, die unterschiedlichen Zeitintervallen des digitalen Bewegungsmusters entsprechen, wobei aufgrund von Absolut- und/oder Relativpositionen der Marker gewisse zeitliche Abfolgen von Bewegungsmustersegmenten anatomisch unwahrscheinlich oder sogar unmöglich sind. Markerpositionen zeitlich aufeinanderfolgender Bewegungsmustersegmente sollten daher gewisse Kreuzkorrelationsgrenzen nicht unterschreiten. Unterschiedliche komplexe digitale Bewegungsmuster können teilweise gleiche digitale Bewegungsmustersegmente aufweisen, die gleichen oder sich stark ähnelnden Bewegungsabschnitten der den unterschiedlichen digitalen Bewegungsmustern korrespondierenden realen Bewegungen entsprechen.

Gemäß einigen Ausführungsbeispielen kann die Bewegungsrekonstruktion nicht nur auf Basis der digitalen Bewegungsdatenbank erfolgen, sondern auch für das Objekt ein physikalisches Modell berücksichtigen, welches manche Bewegungen verbietet bzw. erlaubt. Ein Vorteil ist hier eine physikalisch korrekte Modellierung der Interpolation der Objektbewegung zwischen verschiedenen Bewegungsmustern. So kann beispielsweise ein Übergang von "Laufen" zu "Springen" physikalisch korrekt "überblendet" werden.

Ein zu rekonstruierender realer Bewegungsübergang zwischen zwei Bewegungszuständen des Objekts kann aufgrund unterschiedlicher diskreter Positionsdaten erfasst bzw. ermittelt werden. Die Positionsdaten aus dem Lokalisierungssystem im dreidimensionalen Raum stellen dabei Eingabedaten für die Bewegungsrekonstruktion dar. Sie stammen von verschiedenen Positionen am Objekt, je nachdem wo ein Sender (Tag) angebracht war bzw. ist. Dabei beschreibt ein erstes von dem wenigstens einen Positionsmarker abgeleitetes diskretes Positionsdatensample einen ersten Bewegungszustand (z.B. Anfangsbewegungszustand) und ein zweites, darauffolgendes Positionsdatensample einen zweiten Bewegungszustand (z.B. Endbewegungszustand) innerhalb eines Zeitintervalls zwischen den beiden diskreten Positionsdatensamples. Gemäß Ausführungsbeispielen kann das Zeitintervall der Dauer eines Einzelbilds bzw. eines Frames eines in der Datenbank gespeicherten vorher aufgezeichneten Bewegungsmusters bzw. Bewegungsmustersegments entsprechen, also beispielsweise einem Zeitraum von 1/48 bis 1/12 Sekunde, insbesondere 1/24 oder 1/25 Sekunde. Der erfasste Bewegungsübergang korrespondiert also zu wenigstens einer Trajektorie des wenigstens einen am Objekt befindlichen Positionsmarkers in dem Zeitintervall. Im Falle komplexerer Objekte, wie z.B. einem Menschen, wird es sich um eine Mehrzahl von (funkbasierten) Positionsmarkern handeln, um genügend Stützstellen für die zu erfassende reale Bewegung zu erhalten. Der erfasste Bewegungsübergang korrespondiert also zu den Anfangs- und Endpositionen der Stützstellen in dem Zeitintervall. Anatomisch werden dabei - je nach Objekt und Bewegung - nicht beliebige Anfangs- und Endpositionen der Stützstellen (z.B. Gelenke und Skelettabschnitte) möglich sein, insbesondere bezogen auf vorangegangene Zeitintervalle.

Ist wenigstens ein zu rekonstruierender realer Bewegungsübergang des Objekts erfasst bzw. detektiert, kann anhand dessen zumindest ein zu dem realen Bewegungsübergang korrespondierendes digitales Bewegungsmustersegment aus der Mehrzahl der in der Datenbank hinterlegten digitalen Bewegungsmuster des Computermodells ausgewählt werden. Das kann beispielsweise durch einen Vergleich der relativen und absoluten Markerpositionen zwischen erfasster realer Bewegung und gespeichertem digitalen Bewegungsmuster geschehen. Um diesen Vergleich möglichst unabhängig von der Objektgröße zu machen, können die erfassten Positions- bzw. Bewegungsdaten und/oder die in der Datenbank hinterlegten digitalen Bewegungsmodelle gemäß manchen Ausführungsbeispielen normiert werden. Die Normierung führt dabei zu einer Objekteinheitsgröße. Gemäß manchen Ausführungsbeispielen können also die in der Datenbank hinterlegten digitalen Bewegungsmuster normiert sein, wobei zum Auswählen des digitalen Bewegungsmustersegments die von den Positionsmarkern am Objekt empfangenen Positionsdaten mit einem einer Objektgröße entsprechenden Skalierungsfaktor beaufschlagt werden, um eine normierte Bewegung des Objekts zu erhalten.

Gemäß Ausführungsbeispielen wird dasjenige digitale Bewegungsmustersegment ausgewählt, das mit einer ausreichenden, vorzugsweise maximalen, Wahrscheinlichkeit ausgehend von dem Anfangsbewegungszustand zu dem Endbewegungszustand für das Zeitintervall führt. Dabei können die verschiedenen möglichen Bewegungszustände gemäß manchen Ausführungsbeispielen vermittels eines Markov-Modells bzw. einer diskreten Markov-Kette modelliert werden, um Wahrscheinlichkeiten für das Eintreten zukünftiger Ereignisse bzw. Bewegungszustände anzugeben. Eine Markov-Kette hat die Eigenschaft, dass durch Kenntnis einer begrenzten Vorgeschichte ebenso gute Prognosen über die zukünftige Entwicklung möglich sind wie bei Kenntnis der gesamten Vorgeschichte des Prozesses. Insbesondere können die Bewegungsabläufe auch als sogenanntes Hidden Markov Model (HMM) modelliert werden. Ein HMM ist ein stochastisches Modell, in dem ein System durch eine Markov-Kette mit unbeobachteten Zuständen modelliert wird. Ein HMM kann als einfachster Spezialfall eines dynamischen Bayes'schen Netzes angesehen werden. Die Modellierung als Markov-Kette bedeutet, dass das System auf zufällige Weise von einem Bewegungszustand in einen anderen übergeht, wobei Übergangswahrscheinlichkeiten zwischen Bewegungszuständen nur jeweils vom aktuellen Bewegungszustand abhängen, aber nicht von den davor eingenommenen Bewegungszuständen. Außerdem wird angenommen, dass die Übergangswahrscheinlichkeiten über die Zeit konstant sind. Bei einem HMM werden jedoch nicht diese Zustände selbst von außen beobachtet; sie können verborgen sein. Stattdessen sind jedem dieser inneren Zustände beobachtbare Ausgabesymbole, sogenannte Emissionen, zugeordnet, die je nach Zustand mit gewissen Wahrscheinlichkeiten auftreten. Die Aufgabe besteht meist darin, aus einer beobachteten Sequenz von Emissionen zu wahrscheinlichkeitstheoretischen Aussagen über die verborgenen Zustände zu kommen. Das Auswählen eines oder mehrerer zu einem oder mehreren erfassten Bewegungsübergängen passenden Bewegungsmustersegmenten kann dann beispielsweise mittels eines Algorithmus der dynamischen Programmierung gelöst werden, wie z.B. dem Forward-, dem Backward- oder dem Viterbi-Algorithmus.

Nachdem auf die oben beschriebene Weise ein oder mehrere zu der erfassten realen Bewegung passende digital Computermodellbewegungsmustersegmente ausgewählt wurden, kann basierend darauf das virtuelle Abbild der erfassten Bewegung mithilfe der ausgewählten Computermodellbewegungsmustersegmente rekonstruiert bzw. nachgebildet werden. Die Rekonstruktion kann gemäß verschiedener Ausführungsbeispiele in Echtzeit und/oder in einem Postproduktionsprozess erfolgen. Die aus der Datenbank ausgewählten Computermodellbewegungsmustersegmente, d.h. die Computermodellbewegungsmustersegmentframes, können auf einer elektronischen Anzeigeeinrichtung, wie z.B. einem Display, wiedergegeben werden. Im Idealfall gleicht die wiedergegebene Bewegung des Computermodells der realen Bewegung des realen Objekts. Im Falle von normiert hinterlegten Bewegungsmustersegmenten kann ein ausgewähltes Bewegungsmustersegment zum Rekonstruieren des Abbilds mit einem einer realen Objektgröße entsprechenden Skalierungsfaktor beaufschlagt werden, um einen entnormierten Bewegungsablauf des Objekts mit der wenigstens einen Bewegungsstützstelle zu rekonstruieren.

Ausführungsbeispiele betreffen also ein Konzept, das eine Bewegungsrekonstruktion von beweglichen und vielgliedrigen Objekten (z.B. Menschen, Tiere, mechanische Konstrukte) bzw. Objektverbünde beispielsweise auf Basis von Funkmarker-Daten ermöglicht. Ein Objektverbund sind dabei mehrere interagierende Objekte, wie z.B. ein Spieler, der mit einem Ball dribbelt oder ein Gabelstapler und Paletten. An beliebigen Stützstellen des Objektes können Funkmarker bzw. Sensoren angebracht sein. Es kann ein hinreichend genau auflösendes RTLS System vorgesehen sein, welches die Position (z.B. in x, y, z Koordinaten) der Funkmarker in Echtzeit ermittelt. Die Funkmarkerpositionen können z.B. durch präzise RTLS (Real Time Location Systems) Daten, in Form von x, y, z Positionen im Raum und/oder Beschleunigungsdaten gegeben sein, etc. Hierdurch kann mit hinreichender Genauigkeit und Updaterate der Positionen eine virtuelle Rekonstruktion realer Objekte ermöglicht werden. Die Anzahl der Funkmarker am Objekt lässt sich nach oben beliebig variieren. Die Bewegungsrekonstruktion kann entweder in Echtzeit und/oder im Postproduktionsprozess erfolgen.

In einer digitalen Bewegungsdatenbank kann sich eine beliebige Anzahl von digitalen Bewegungssamples befinden. Es können für das zu erfassende Objekt beliebige und beliebig viele digitale Bewegungsabschnitte gespeichert sein. Diese können bei Menschen typische Bewegungen, wie z.B. Laufen, Gehen, Springen, etc., umfassen. Die gespeicherten Bewegungsabschnitte können eine Anzahl von Einzelbildern bzw. Frames mit den Stützstellen der Funkmarker und dem gesamten Objekt aufweisen.

Ausführungsbeispiele der vorliegenden Erfindung erlauben eine sinnvolle bzw. plausible Bewegungsrekonstruktion des Objektes, selbst wenn die erfassten Funkmarkerdaten unvollständig oder verrauscht sind, und können beispielsweise zur virtuellen 3D Bewegungsrekonstruktion, für virtuelle Reality Anwendungen, Augmented Reality Anwendungen, zur Trainingsanalyse, zur Spielanalyse, oder für audiovisuelle Medien eingesetzt werden. Ebenso ist eine Übertragung von Bewegungsdaten auf (mobile) Endgeräte und eine Bewegungsrekonstruktion am Endgerät denkbar. Manche Ausführungsbeispiele ermöglichen auch eine Rekonstruktion von Bewegungsdaten in Echtzeit bei geringen Hardware-Ressourcen.

Einige Ausführungsbeispiele der vorliegenden Erfindung werden nun nachfolgend Bezug nehmend auf die beiliegenden Figuren näher erläutert. Es zeigen:
- Fig. 1: ein schematisches Ablaufdiagramm eines Verfahrens zur Rekonstruktion einer Bewegung eines Objekts, gemäß einer Ausführungsform;
- Fig. 2: ein schematisches Blockdiagramm einer Vorrichtung zur Rekonstruktion einer Bewegung eines Objekts, gemäß einer Ausführungsform;
- Fig. 3: eine schematische Darstellung zur Erläuterung der Erfassung eines realen Bewegungsübergangs;
- Fig. 4a: eine exemplarische Darstellung einer Markov-Kette zur Modellierung von Bewegungszuständen;
- Fig. 4b: eine schematische Darstellung zur Erläuterung der Auswahl eines zu dem erfassten Bewegungsübergang korrespondierenden digitalen Bewegungsmustersegments aus einer Bewegungsdatenbank mittels eines Trellis;
- Fig. 5: eine schematische Darstellung zur Erläuterung der Rekonstruktion eines virtuellen Abbilds der Bewegung des Objekts unter Verwendung des ausgewählten digitalen Bewegungsmustersegments; und
- Fig. 6: ein schematisches Blockdiagram eines Systems zur Rekonstruktion einer Bewegung eines Objekts, gemäß einer Ausführungsform.

In der nachfolgenden exemplarischen Beschreibung einiger Ausführungsbeispiele der vorliegenden Erfindung können sich gleiche Bezugszeichen auf gleiche, ähnliche oder funktional gleiche Bauteile bzw. Komponenten beziehen.

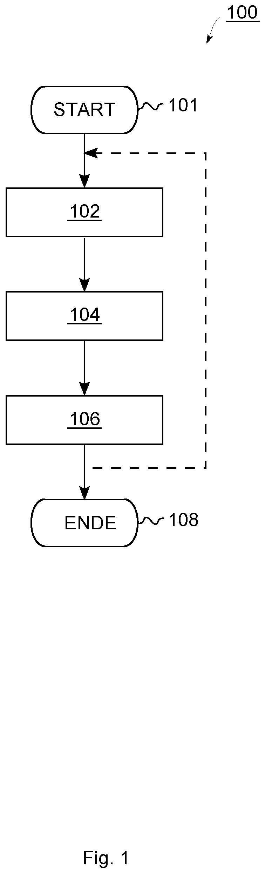

Die Fig. 1 zeigt in einer schematischen Darstellung ein Ablaufdiagramm eines Verfahrens 100 zur virtuellen Rekonstruktion einer realen Bewegung eines Objekts, z.B. eines Sportlers, aus einer Sequenz von vorab erstellten digitalen Bewegungsmustersegmenten eines Computermodells des Objekts (z.B. des Sportlers) gemäß einem Ausführungsbeispiel der vorliegenden Erfindung.

Bei dem Bewegungsrekonstruktionsverfahren 100 entspricht jedes Bewegungsmustersegment bzw. jeder Bewegungsmusterabschnitt einem unterschiedlichen Zeitintervall bzw. -abschnitt einer Bewegung. Das reale Objekt, dessen reale Bewegung rekonstruiert werden soll, verfügt über wenigstens eine mit einem Positionsmarker versehene Bewegungsstützstelle. Gemäß einigen Ausführungsbeispielen kann es sich bei den Positionsmarkern um funkbasierte Positionsmarker handeln. Das Objekt kann ein oder mehrere Bewegungsstützstellen haben. Die Stützstellen entsprechen den Befestigungsorten der Positionsmarker.

Das Bewegungsrekonstruktionsverfahren 100 umfasst nach einem Start-Schritt 101 einen Schritt 102 des Erfassens eines (realen) Bewegungsübergangs zwischen einem Anfangsbewegungszustand und einem Endbewegungszustand des Objekts in einem Zeitintervall der realen Bewegung basierend auf von dem Positionsmarker empfangenen Positionsdaten der wenigstens einen Bewegungsstützstelle. Bei funkbasierten Positionsmarkern können die empfangenen Positionsdaten mehr oder weniger verrauscht sein. Ferner umfasst das Verfahren 100 einen Auswahl-Schritt 104, bei dem zumindest ein zu dem erfassten bzw. detektierten realen Bewegungsübergang korrespondierendes digitales Bewegungsmustersegment aus einer Mehrzahl von in einer Datenbank bzw. einem Speicher hinterlegten digitalen Bewegungsmustern des Computermodells ausgewählt wird, derart, dass das ausgewählte digitale Bewegungsmustersegment mit einer ausreichend hohen Wahrscheinlichkeit ausgehend von dem Anfangsbewegungszustand zu dem Endbewegungszustand des Zeitintervalls führt. In einem weiteren Verfahrensschritt 106 wird ein virtuelles Abbild der realen Bewegung des Objekts für das Zeitintervall unter Verwendung des Anfangsbewegungszustands und des ausgewählten digitalen Bewegungsmustersegments rekonstruiert.

Gemäß manchen Ausführungsbeispielen bedeuten die Verfahrensschritte 102 bis 106 eine aktuelle Iteration bzw. Rekursion eines iterativen bzw. rekursiven Verfahrens zur Rekonstruktion der realen Bewegung des Objekts (z.B. Sportler). Das bedeutet, dass der Anfangsbewegungszustand für eine aktuelle Iteration/Rekursion in einer vorhergehenden Iteration/Rekursion des iterativen/rekursiven Verfahrens rekonstruiert bzw. geschätzt worden sein kann, so dass sich das rekonstruierte virtuelle Abbild der realen Bewegung aus einer Mehrzahl von ausgewählten und aufeinanderfolgenden Zeitintervallen oder Iterationen/Rekursionen entsprechenden digitalen Bewegungsmustersegmenten zusammensetzen kann. Für eine Mehrzahl von aufeinanderfolgenden Zeitintervallen resultiert daraus eine Rekonstruktion der gesamten realen Bewegung des Objekts basierend auf den zu den mehreren Zeitintervallen jeweils korrespondierenden Bewegungsmustersegmenten. Wurde ein realer Bewegungsablauf von Interesse mittels des Verfahrens 100 rekonstruiert, so kann dieses in einem abschließenden Schritt 108 beendet werden.

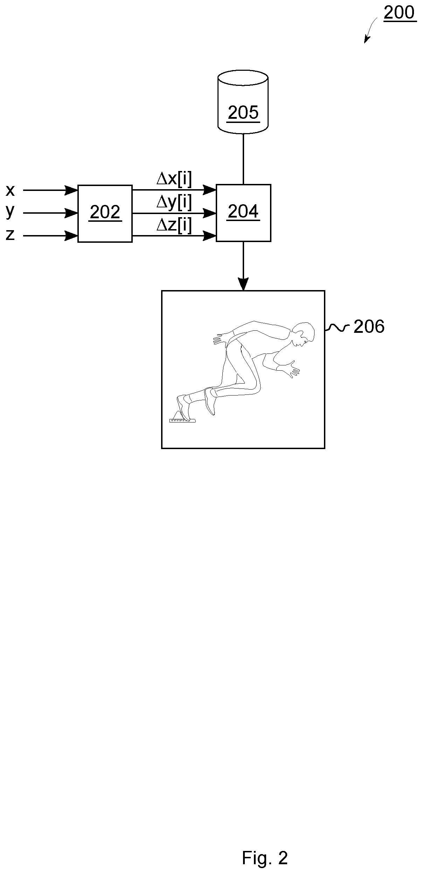

Das anhand der Fig. 1 überblicksartig erläuterte Verfahren 100 kann mittels einer Vorrichtung 200 zur Rekonstruktion einer realen Bewegung eines Objekts aus einer Sequenz von digitalen Bewegungsmustersegmenten eines Computermodells des Objekts implementiert werden, welche nun nachfolgend Bezug nehmend auf die Fig. 2 näher beschrieben wird.

Die Vorrichtung 200, welche beispielsweise als ein oder mehrere Prozessoren implementiert sein kann, umfasst eine Bewegungserfassungseinrichtung 202, die ausgebildet ist, um einen (realen) Bewegungsübergang (Δx[*i*], Δy[*i*], Δz[*i*]) zwischen einem Anfangsbewegungszustand (x[*i*-1], y[*i*-1], z[*i*-1]) und einem Endbewegungszustand (x[*i*], *y*[*i*], *z*[*i*]) des Objekts in einem Zeitintervall *i* der (realen) Bewegung basierend auf von dem wenigstens einen Positionsmarker empfangenen (und evtl. verrauschten) Positionsdaten (z.B. x-, y-, z-Koordinaten) der wenigstens einen Stützstelle des Objekts zu erfassen bzw. zu detektieren. In anderen Worten ausgedrückt dient die Bewegungserfassungseinrichtung 202 zur Durchführung des vorher beschriebenen Verfahrensschritts 102. Die Vorrichtung 200 weist ferner eine mit der Bewegungserfassungseinrichtung 202 gekoppelte Auswahleinrichtung 204 auf, die angepasst ist, um zumindest ein zu dem detektierten Bewegungsübergang (Δx[*i*], Δy[*i*], Δz[*i*]) korrespondierendes digitales Bewegungsmustersegment aus einer Mehrzahl von in einer Datenbank 205 hinterlegten digitalen Computermodellbewegungsmustern auszuwählen, wobei das ausgewählte Computermodellbewegungsmustersegment mit einer ausreichend hohen Wahrscheinlichkeit ausgehend von dem Anfangsbewegungszustand (x[*i*-1], y[*i*-1], z[*i*-1]) zu dem Endbewegungszustand (x[*i*], *y*[*i*], *z*[*i*]) des gerade betrachteten Zeitintervalls *i* führt. In anderen Worten ausgedrückt dient die Auswahleinrichtung 204 zur Durchführung des vorher beschriebenen Verfahrensschritts 104. Außerdem ist im Rahmen der Vorrichtung 200 ferner eine mit der Auswahleinrichtung 204 gekoppelte Rekonstruktionseinrichtung 206 vorgesehen, die ausgebildet ist, um ein Abbild der Bewegung des Objekts für das betrachtete Zeitintervall *i* unter Verwendung des Anfangsbewegungszustands (x[*i*-1], y[*i*-1], z[*i*-1]) und des ausgewählten digitalen Bewegungsmustersegments zu rekonstruieren. In anderen Worten ausgedrückt dient die Rekonstruktionseinrichtung 206 zur Durchführung des vorher beschriebenen Verfahrensschritts 106. Dabei kann das Abbild der realen Bewegung aus einem oder einer Mehrzahl von aufeinanderfolgenden digitalen Bewegungsmustersegmenten aus der Datenbank 205 rekonstruiert und beispielsweise über eine geeignete Anzeigevorrichtung wiedergegeben werden.

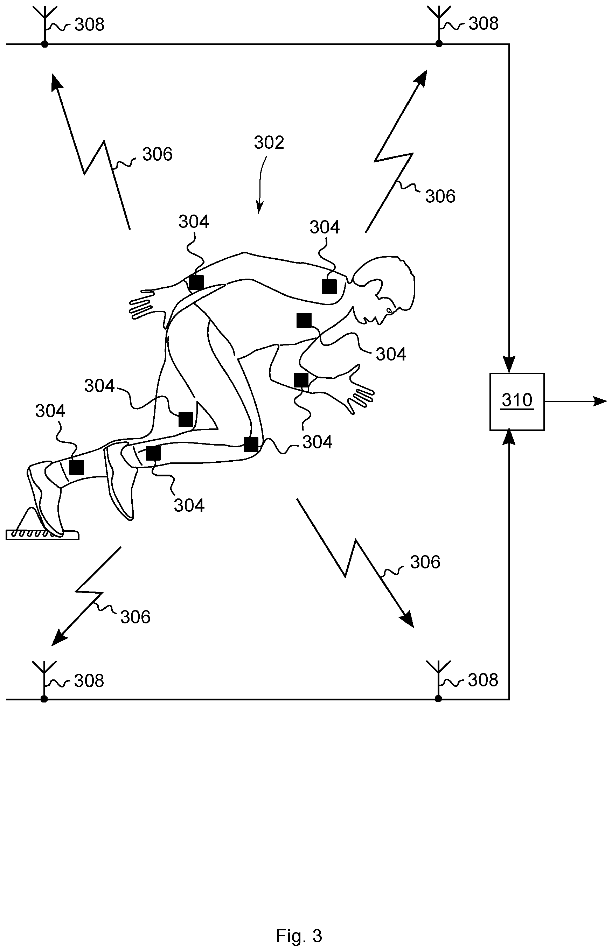

Anhand der Fig. 3 wird nun veranschaulicht, wie die Erfassung des realen Bewegungsübergangs bzw. der realen Bewegung mithilfe der am Objekt befindlichen Positionsmarker ausgeführt werden kann.

Die Fig. 3 zeigt ein Objekt 302 in Form einer schematisierten Person. An verschiedenen Bewegungsstützstellen des Objekts 302 befinden sich Positionsmarker 304, welche zur Ermittlung der räumlichen Positionen der verschiedenen Bewegungsstützstellen dienen. Bei den Positionsmarkern 304 kann es sich gemäß einem Ausführungsbeispiel insbesondere um funkbasierte Positionsmarker handeln, welche Lokalisierungsfunksignale 306 aussenden, die von wenigstens einer oder auch mehreren Empfangsantennen 308 empfangen werden können. Dabei können die Lokalisierungssignale 306 gemäß manchen Ausführungsbeispielen direkt geographische Koordinaten der einzelnen Funkmarker 304 aufweisen. Bei anderen Ausführungsformen können die einzelnen geographischen Positionen der Funkmarker 304 auch mittels anderer Verfahren, wie z.B. Triangulation durch Laufzeitmessung oder ähnliches, ermittelt werden. Die Positionsdaten können dabei framebasiert, d.h. pro Einzelbild (ca. 1/24 Sekunde) der erfassten Bewegung, ermittelt werden. Dazu kann beispielsweise ein Empfänger 310 auf Basis von Winkel- und/oder Laufzeitmessungen die zur Positionsberechnung eines Funkmarkers 304 erforderlichen Telemetriedaten, wie z.B. x-, y-, z-Koordinaten, Geschwindigkeitsdaten, Beschleunigungsdaten, etc., erfassen und der Erfassungseinrichtung 202 pro Frame zur Verfügung stellen. Demnach kann bei Ausführungsbeispielen der wenigstens eine Positionsmarker 304 am Objekt 302 mit einem Funksender gekoppelt sein, der Signale 306, aus denen Positionsdaten des Funkmarkers 304 abgeleitet werden können, über eine Funkschnittstelle zu der Auswertevorrichtung 310 übermittelt, die wiederum mit der Rekonstruktionsvorrichtung 200 gekoppelt sein kann, um das Rekonstruktionsverfahren 100 auszuführen. Die Positionsmarker 304 können dabei Teil eines Echtzeit-Lokalisierungssystems sein, so dass die Markerpositionen und/oder die reale Bewegung des Objekts in Echtzeit ermittelt und rekonstruiert werden können.

Zurückkommend auf die Fig. 2 können in der elektronischen Speichereinheit bzw. Datenbank 205 vorab erstellte digitale Computermodellbewegungsmuster bzw. deren Bewegungsmustersegmente, welche durch einzelne Frames dargestellt werden können, abgespeichert sein. Dabei entspricht ein Frame einem vorher erstellten Einzelbild eines Computermodellbewegungsmusters. Ein Computermodellbewegungsmuster, welches einen vorher aufgenommenen Bewegungsablauf von Interesse virtuell darstellt, besteht gemäß einigen Ausführungsbeispielen aus nicht weniger als zwei Frames. Demnach umfasst ein Computermodellbewegungsmustersegment, welches wiederum eine Untermenge eines Computermodellbewegungsmusters darstellen kann, wenigstens einen Frame. Daraus folgt, dass ein Computermodellbewegungsmustersegment auch durchaus Teil zweier unterschiedlicher Gesamtbewegungsabläufe bzw. digitaler Computermodellbewegungsmuster sein kann. Das ist der Tatsache geschuldet, dass komplexere Bewegungen zumeist aus mehreren Bewegungssegmenten aufgebaut sind, wobei sich einzelne Bewegungssegmente unterschiedlicher komplexer Bewegungen gleichen bzw. ähneln können.

Die in der Datenbank 205 hinterlegten Computermodellbewegungsmuster, welche aus den Computermodellbewegungsmustersegmenten bzw. Frames zusammengesetzt sind, können gemäß einigen Ausführungsbeispielen als normierte digitale Bewegungsmuster hinterlegt sein. Dadurch können die Objekte bzw. deren Computermodelle z.B. auf eine Einheitsgröße normiert werden, um einen besseren Vergleich mit erfassten bzw. detektierten realen Bewegungen zu ermöglichen. Die Stellen bzw. Positionen, an denen Positionsmarker bei der Erstellung der Computermodellbewegungsmuster getragen wurden, sind bekannt und können im Wesentlichen denjenigen Positionen am Objekt entsprechen, an denen danach die Positionsmarker zur Erfassung der zu rekonstruierenden realen Bewegung getragen werden. Somit können zum Auswählen 104 eines Computermodellbewegungsmustersegments durch die Einrichtung 204 die von den am Objekt befindlichen Positionsmarkern empfangenen Positionsdaten mit einem einer Objektgröße entsprechenden Skalierungsfaktor beaufschlagt werden, um eine normierte Bewegung des Objekts zu erhalten und diese mit den in der Datenbank 205 gespeicherten normierten Bewegungsmustern vergleichen zu können. Die in der Bewegungsdatenbank 205 gespeicherten Bewegungsmuster also können normiert werden bzw. sein. Die im Schritt 102 eingehenden Funkmarker- bzw. Positionsdaten können vor dem Vergleich und der Auswahl 104 ebenfalls normiert werden. Der Skalierungsfaktor kann dabei jedoch für die anschließende Rekonstruktion 106 gemerkt werden. Nachdem ein Ergebnis feststeht, kann das entsprechende Computermodellbewegungsmuster über den Skalierungsfaktor an das reale Objekt angeglichen werden. Hiermit können Objekte unterschiedlicher Größe sinnvoll und platzsparend abgelegt werden.

Die Datenbank 205 kann typische Bewegungsmuster von Personen / Objekten / Objektgruppen enthalten, die vermittels ihrer Bewegungsstützstellen identifiziert bzw. abgebildet werden können. Artefaktfilter oder ähnliches sind hierbei nicht nötig, da die aus der Datenbank 205 abgefragten Bewegungen vorzugsweise eine homogene Bewegungsform darstellen. Einzelne Bewegungsmustersegmente bzw. Frames können als Bewegungszustände bezeichnet werden und in der Datenbank 205 mit imaginären Kanten bzw. Zustandsübergängen versehen werden. Einzelne sich stark ähnelnde Bewegungsmustersegmente bzw. Frames können eventuell zusammengefasst werden, so dass ein digitaler Frame bzw. digitales Bewegungsmustersegment zeitgleich Teil zweier unterschiedlicher Bewegungen bzw. Computermodellbewegungsmuster sein kann.

Die Auswahleinrichtung 204, welche auch als Matching-Unit bezeichnet werden kann, kann eingerichtet sein, um mögliche Bewegungszustände und deren Wahrscheinlichkeiten, sich in einer bestimmten Bewegung bzw. einem Frame zu befinden, zu führen. Gemäß einigen Ausführungsbeispielen der vorliegenden Erfindung können die unterschiedlichen Bewegungszustände im Sinne einer Markov-Kette miteinander verbunden sein. Ein aktueller Bewegungszustand und wenigstens ein vergangener Bewegungszustand des Objekts können also eine Sequenz eines Markov-Models bilden.

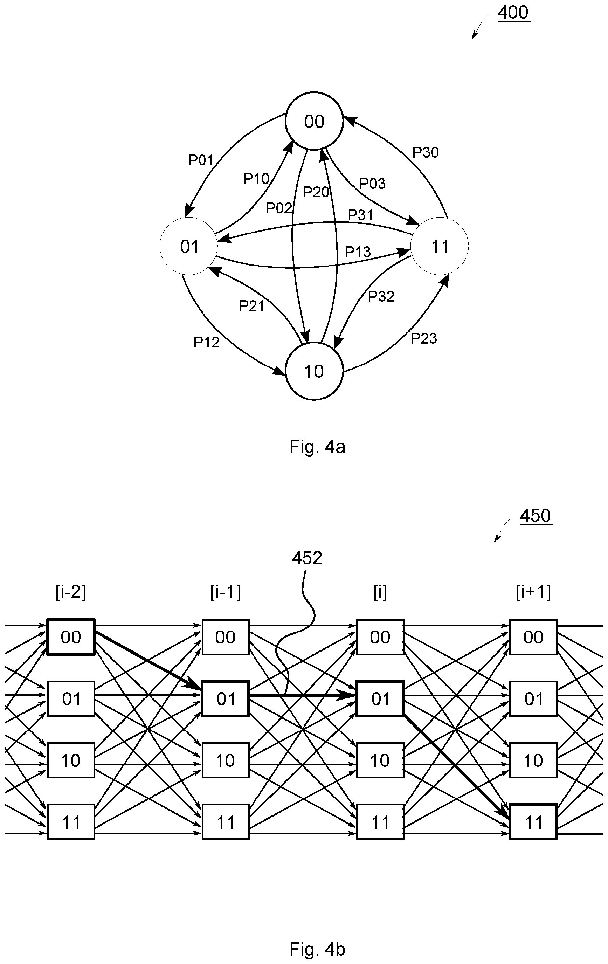

Dazu zeigt die Fig. 4a lediglich exemplarisch eine Markov-Kette 400 mit vier (Bewegungs-) Zuständen "00", "01", "10", "11" und vollständigen Verbindungen bzw. Kanten zwischen den Zuständen. Die Kanten beschreiben dabei Zustandsübergänge, wobei ein Zustandsübergang mit einer Übergangswahrscheinlichkeit p verknüpft ist. Gemäß dem exemplarisch dargestellten Markov-Model der Fig. 4a ist eine Übergangswahrscheinlichkeit für einen Zustandsübergang von Zustand "00" zum Zustand "01" mit "p₀₁" bezeichnet. Umgekehrt bezeichnet "p₁₀" eine Übergangswahrscheinlichkeit vom Zustand "01" in den Zustand "00". Entsprechendes gilt für die weiteren dargestellten Zustände. Bei der in Fig. 4a gezeigten Markov-Kette 400 kann ein erster Zustand in jeden anderen zweiten Zustand übergehen, was durch die dargestellten Zustandsübergänge (Pfeile) deutlich wird. Es sind natürlich auch andere Markov-Ketten möglich, bei denen bestimmte Zustandsübergänge ausgeschlossen sein können. Insbesondere bei einer Markov-Kette, welche mögliche reale Bewegungszustände und deren Übergänge beschreibt, wird dies der Fall sein. Wie es weiter oben bereits erläutert wurde, sind aufgrund von anatomischen bzw. physischen Limitierungen nicht beliebige Folgezustände ausgehend von einem Bewegungsanfangszustand möglich. Es soll daher betont werden, dass das in Fig. 4a gezeigte vereinfachte Zustandsmodell lediglich zur Veranschaulichung dient und nicht tatsächlichen Bewegungszustandsmodellen, insbesondere für komplexe Bewegungen, entspricht. In praktischen Implementierungen kann eine Anzahl von möglichen Bewegungszuständen einen Wert von über 1.000, über 10.000, über 100.000 und in manchen Anwendungsfällen sogar über 1 Million aufweisen.

Da gemäß manchen Ausführungsbeispielen alle möglichen Bewegungszustände im Sinne einer Markov-Kette miteinander verbunden sein können, können Aufenthaltswahrscheinlichkeiten für Bewegungszustände zum diskreten Zeitpunkt i basierend auf den Zustandswahrscheinlichkeiten zum Zeitpunkt i-1 und basierend auf aktuellen Sensormesswerten iterativ berechnet werden. Die vorher beschriebenen Verfahrensschritte 102 bis 106 können also eine aktuelle Iteration eines iterativen Verfahrens zur Rekonstruktion der realen Bewegung bilden, wobei der Anfangsbewegungszustand für die aktuelle Iteration i in einer vorhergehenden Iteration i-1 des iterativen Verfahrens rekonstruiert bzw. ermittelt wurde, so dass sich das rekonstruierte Abbild der Bewegung aus einer Mehrzahl von ausgewählten und aufeinanderfolgenden Zeitintervallen oder Iterationen entsprechenden Bewegungsmustersegmenten zusammensetzt. Es kann daher sein, dass eine rekonstruierte komplexe Bewegung aus zwei oder mehr in der Datenbank 205 gespeicherten digitalen Teilbewegungsmustern zusammengesetzt wird, z.B. aufgrund von sich überschneidenden Frames und passenden Sensormesswerten. Es braucht daher nicht jede beliebige komplexe bzw. zusammengesetzte Bewegung vorher aufgenommenen und in der Datenbank 205 hinterlegt werden, da neue zusammengesetzte Bewegungen aus "Sub-Bewegungen" bzw. Frame-Abfolgen generiert werden können.

Ein weiterer Faktor ist die Anzahl der vorhandenen Sender bzw. Positionsmarker bei der initialen Bewegungsaufnahme (Pre-Produktion) und die Anzahl der Positionsmarker in einer aktuell zu rekonstruierenden Bewegungsszene. Obwohl es vorteilhaft sein kann, wenn sich sowohl eine Anzahl als auch eine Position der Positionsmarker bei der initialen Bewegungsaufnahme und der aktuell zu rekonstruierenden Szene gleichen, ist dies nicht zwingend notwendig. Es kann beispielsweise der Fall sein, dass aktuell nicht genügend Sender bzw. Positionsmarker parallel verfolgt bzw. getrackt werden können. Daher ist es gemäß manchen Ausführungsbeispielen möglich, lediglich eine Permutation, d.h. eine Submenge, der in den originalen und gespeicherten digitalen Bewegungsaufnahmen enthaltenen Sender und deren Positionen zu verfolgen. Die Wahrscheinlichkeiten, die in Schritt 104 für die möglichen Bewegungszustände ermittelt werden, können dann alle möglichen Permutationen in Betracht ziehen und, wie gewohnt, möglichst die wahrscheinlichste Verteilung und Bewegungszustand auswählen. Unter Umständen kann das zu einer Verzerrung des Rekonstruktionsergebnisses führen. Hierbei meint "Verzerrung", dass das Rekonstruktionsergebnis nicht richtig ist bzw. nicht der tatsächlichen Bewegung des Objekts entspricht. Wirkliche Verzerrungen sind mit dem erfindungsgemäßen Konzept jedoch nicht möglich, da mögliche Kantenbewegungen im Zustandsgraphen keine unmöglichen oder unrealistischen Bewegungen zulassen. Es kann daher immer nur die nächstwahrscheinliche digitale Frame-Folge dargestellt werden, so dass ein rekonstruiertes Bewegungsbild niemals wie eine "Zombie"-Rekonstruktion aussehen kann.

Die Auswahleinrichtung bzw. Matching-Unit 204 kann also mögliche Bewegungszustände (Frames) mit deren Wahrscheinlichkeiten zu jedem Zeitpunkt i halten. Diese Bewegungszustände können mittels Kanten verbunden sein, welche wiederum Wahrscheinlichkeiten besitzen (Übergangswahrscheinlichkeiten). Diese Übergangswahrscheinlichkeiten können nach dem Aufnehmen der Daten (Computermodellbewegungsmuster), jedoch vor der Bewegungsrekonstruktion bestimmt werden, beispielsweise durch Ermitteln von Übergangshäufigkeiten oder ähnlichem. Ferner ist eine kontinuierliche Aktualisierung der Übergangswahrscheinlichkeiten aufgrund von tatsächlich ermittelten und durchgeführten Bewegungsübergängen möglich. Man kann von einem Zustandsgraphen (Netz), wie z.B. der Markov-Kette 400, mehrere verschiedene Auflösungen erstellen, indem man von einem vollständigen Zustandsgraphen (z.B. 100 Bewegungen à 1000 Frames = ca. 100.000 Bewegungszustände) sukzessive Frames bzw. Bewegungszustände mit geringen Änderungen bzw. Abweichungen zwischen den Markerpositionen zusammenfasst. Hierdurch kann der Zustandsraum reduziert werden und damit auch ein Aufwand zur Berechnung der Aufenthaltswahrscheinlichkeiten (welcher quadratisch zur Anzahl der Bewegungszustände ist).
Um die Bewegungszustandswahrscheinlichkeiten zu berechnen, kann man zunächst mit dem kleinsten Zustandsmodell (d.h. wenige Zustände) beginnen, um darin relativ schnell den wahrscheinlichsten Bewegungszustand zu erhalten. Ist danach noch Rechenzeit übrig, so kann man beispielsweise in die nächst tiefere Zustandsauflösung wechseln (d.h. mehr Zustände), und dort weitere Bewegungszustandswahrscheinlichkeiten bestimmen, um einen höheren Detaillierungsgrad für die Bewegungsrekonstruktion zu erhalten. Gemäß einigen Beispielen, die nicht zu der Erfindung gehören, kann ein digitales Bewegungsmustersegment für ein Zeitintervall *i* also zunächst basierend auf einer Untermenge einer Menge möglicher Bewegungszustände ausgewählt werden, wobei die Untermenge angepasst ist, um das Abbild der Bewegung zumindest grob rekonstruieren zu können, und wobei nach einer groben Rekonstruktion das Abbild der Bewegung basierend auf weiteren Zuständen aus der Menge außerhalb der Untermenge feiner rekonstruiert werden kann.
Zum Auswählen des zum erfassten realen Bewegungsübergang im Zeitintervall i am besten korrespondierenden digitalen Bewegungsmustersegments können (bisher) erfasste Bewegungsübergänge iterativ mit den in der Datenbank 205 hinterlegten digitalen Bewegungsmustern des Computermodells verglichen werden, derart, dass eine Hypothese für einen aktuellen Bewegungszustand des Objekts basierend auf wenigstens einem vergangenen Bewegungszustand des Objekts und einer aktuellen Übergangswahrscheinlichkeit, die einem möglichen Bewegungsübergang zwischen wenigstens zwei zeitlich aufeinanderfolgenden diskreten Bewegungszuständen des Objekts entspricht, ermittelt wird. Dies wird nachfolgend anhand der Fig. 4b näher erläutert.

Die Fig. 4b zeigt ein zu dem exemplarischen Zustandsmodell 400 korrespondierendes Trellis-Diagramm 450. Dabei entspricht das Trellis-Diagramm 450 der Darstellung des Zustandsübergangsdiagramms 400, welches über die Zeitachse abgeholt wird. Lediglich beispielhaft sind hier Zustände "00", "01", "10", "11" und mögliche Zustandsübergänge zu Zeitpunkten *i*-2, *i*-1, *i* und *i*+1 dargestellt. Den Übergängen von einem Zustand in den nächsten sind verschiedene Wahrscheinlichkeitswerte (Übergangswahrscheinlichkeiten) p zugeordnet, wodurch infolge sich über mehrere Zustände hinweg meist eindeutig ein einziger Pfad 452 im Trellis herausbildet, der, basierend auf den erfassten Bewegungsübergangsdaten, die höchste Summenwahrscheinlichkeit gegenüber allen anderen Pfaden aufweist. Die diesem Zustandspfad 452 zugeordneten Bewegungsübergänge werden dann von einem Bewegungsdecoder als die am wahrscheinlichsten Bewegungsübergänge angesehen. Das heißt, ähnlich wie beim bekannten Viterbi-Algorithmus kann man sich sukzessive durch verschiedene Bewegungszustände hangeln, um die aktuell wahrscheinlichste Bewegungsabfolge zu ermitteln. Dies kann als "adaptives Matching" bezeichnet werden.

Bei manchen Ausführungsbeispielen können bei der Suche 104 nach passenden Bewegungsmustersegmenten bzw. Bewegungszustandsübergängen zunächst nur solche Computermodellbewegungsmustersegmente berücksichtigt werden, welche gemäß dem Markov-Modell mit den höchsten (Übergangs-)Wahrscheinlichkeiten auftreten, d.h., deren Wahrscheinlichkeiten beispielsweise oberhalb eines vorbestimmten Schwellenwerts liegt. Beispielsweise kann nach einem passenden Computermodellbewegungsmustersegment zuerst in den 100 wahrscheinlichsten Computermodellbewegungsmustersegmenten gesucht werden, danach in den nächstwahrscheinlichen 100 bis 1000 Computermodellbewegungsmustersegmenten, etc. Durch eine solche Ausführungsform kann ein Auffinden eines passenden Bewegungsmustersegments erheblich beschleunigt werden.

Gemäß manchen Ausführungsbeispielen können bei den Zustandsübergängen gefundene Übergangswahrscheinlichkeiten abgelegt und zur Verbesserung der Bewegungsablaufrekonstruktion verwendet werden. Dies kann auch online erfolgen und Zustandsübergangswahrscheinlichkeiten können live adaptiert werden. In anderen Worten kann beim Auswählen der zu den realen Bewegungsübergängen korrespondierenden Bewegungsmustersegmente eine dynamische Anpassung der Übergangswahrscheinlichkeiten anhand von tatsächlich gefundenen Bewegungszustandsübergängen während der Laufzeit stattfinden. Das bedeutet, dass beispielsweise ein anfängliches noch unausgereiftes Markov-Modell, welches mögliche Bewegungszustände und -übergänge beschreibt, ständig an tatsächlich beobachtete Bewegungen angepasst und damit verbessert werden kann. Weniger häufig auftretenden Bewegungszuständen bzw. Bewegungsübergängen eines Objekts kann adaptiv eine niedrige Wahrscheinlichkeit zugeordnet werden als häufiger auftretenden Bewegungszuständen bzw. Bewegungsübergängen. Somit kann ein Bewegungsmodell (z.B. ein Markov-Modell) während der Laufzeit kontinuierlich an ein bestimmtes Objekt angepasst werden. Das System wird somit quasi lernfähig.

Die Auswahleinrichtung 204 bzw. die Matching-Unit kann als zeitkritische Komponente betrachtet werden. Das Rekonstruieren 106 der eigentlichen Bewegung ist in konstanter Zeit [O(1)] machbar, und hat daher kaum negativen Einfluss auf eine Echtzeitfähigkeit des Verfahrens 100. Um sogenannte Worst Case Execution Times (WECT) einhalten zu können, kann das Verfahren 100 gemäß manchen Ausführungsbeispielen zu jeder erdenklichen Zeit das bisher bestmögliche Ergebnis zurückliefern. Sollte noch weitere Zeit für Berechnungen zur Verfügung stehen, kann das Ergebnis iterativ verbessert werden. Beim Auswählen 104 des digitalen Bewegungsmustersegments kann also nach einer vorbestimmten Zeitdauer nach dem Erfassen 102 des realen Bewegungsübergangs ein digitales Bewegungsmustersegment ausgewählt werden, welches nach dieser Zeitdauer mit der höchsten Wahrscheinlichkeit ausgehend von dem Anfangsbewegungszustand zu dem Endbewegungszustand für das Zeitintervall führt. Beispielsweise kann bis zu einem ersten Zeitpunkt nach einem Empfangen der Positionsdaten das digitale Bewegungsmustersegment aus der Mehrzahl der hinterlegten digitalen Bewegungsmuster ausgewählt werden, welches zu diesem ersten Zeitpunkt mit der höchsten Wahrscheinlichkeit der erfassten realen Bewegung des Objekts entspricht, und wobei nach dem ersten Zeitpunkt bis zu einem zweiten Zeitpunkt weiter nach einem besser passenden Bewegungsmustersegment für das Zeitintervall gesucht wird. Somit können Zeitschranken eingehalten werden, und das rekonstruierte Bild (z.B. mit einem Frame Verzögerung) gezeichnet werden. Solch ein Verfahren kann als "Progressives Matching" bezeichnet werden, wobei ein Bild schnell in "schlechter" Qualität angezeigt und Stück für Stück feiner gezeichnet werden kann. Schlechte Qualität meint dabei ein Auffinden eines nicht 100% passenden Frames bzw. Bewegungsmustersegments des Computermodells.

Gemäß Ausführungsbeispielen können verschiedene Animationen aus der Bewegungsdatenbank 205 mit Hilfe aufgenommener Funkmarker- bzw. Positionsdaten der Stützstellen aneinandergereiht werden. Die Funkmarkerdaten dienen dabei als kontinuierliche bzw. periodische Eingabeparameter und es erfolgt ein Abgleich mit den hinterlegten digitalen Bewegungsdaten, um ein passendes Computermodellbewegungsmuster mit der geringsten Abweichung innerhalb einer vorgegebenen Zeitspanne (z.B. 1/24 Sekunde) auszuwählen. Eine Möglichkeit hierzu ist die Speicherung der Computermodellbewegungsmuster in unterschiedlichen Qualitätsstufen und dann eine progressive Suche, beginnend mit der geringsten Qualität. Der Vorteil ist eine Rückmeldung innerhalb der vorgegebenen Zeitspanne, um die Bewegung flüssig rekonstruieren zu können. Computermodellbewegungsmustersamples geringerer Qualität können weniger Frames beinhalten, um die zu durchsuchende Datenmenge einzuschränken. Ist innerhalb der vorgegebenen Zeitspanne nach Auswahl eines Bewegungsmusters noch weitere Zeit, kann eine Suche in der nächsthöheren Qualitätsstufe vorgenommen werden.

Als weitere vorteilhafte Ausgestaltungen können Zustandsübergänge zwischen den Bewegungsmodellen entweder a priori vorliegen oder während der Rekonstruktion in Echtzeit erstellt werden. Hierbei entsteht ein Abhängigkeitsgraph, der die Bewegungsmuster als Knoten und die Übergänge als Kanten mit einem Kantengewicht (z.B. Anzahl der erkannten Übergänge oder Wahrscheinlichkeit des Übergangs) darstellt. Hierdurch können zunächst die wahrscheinlichsten Übergänge durchsucht werden und später die unwahrscheinlicheren Übergänge. Damit kann selbst in sehr eingeschränkten Zeitabschnitten eine erste Lösung gefunden werden, die dann beim Vorhandensein weiterer Zeit verfeinert werden kann.

Bei manchen Ausführungsbeispielen können zusätzlich oder alternativ grundlegendere Bewegungsinformationen zuerst bearbeitet werden, z.B. bezüglich der zeitlichen Reihenfolge der Bearbeitung in einem Rechner. Bewegungsauflösungen mit zunehmendem Detailgrad und abnehmenden Informationsgehalt können beispielsweise später errechnet oder ggf. weggelassen werden, falls keine Rechenzeit mehr zur Verfügung steht. Eine weitere mögliche "Sortierreihenfolge" kann die Größe des Objekts auf einem Bildschirm sein. Für kleine Objekte muss der korrekte Bewegungszustand nicht 100%-ig ermittelt werden, es reicht wenn die Bewegung ungefähr übereinstimmt, da dies vom Betrachter kaum wahrgenommen wird. Einem größeren Objekt kann beim Auswählen eines passenden Bewegungsmustersegments also eine höhere Priorität zugewiesen werden als einem demgegenüber kleineren Objekt. Dabei können höher priorisierte Objekte zeitlich eher rekonstruiert werden als niedriger priorisierte Objekte. Zusätzlich oder alternativ können auch unterschiedlichen Stützstellen des realen Objekts unterschiedliche Prioritäten zugewiesen werden. Dabei können Positionsdaten von höher priorisierten Stützstellen zeitlich eher ausgewertet werden als Positionsdaten von niedriger priorisierten Stützstellen. Eine weitere Möglichkeit liegt in einer unterschiedlichen zeitlichen Abtastrate (Sampling-Rate) der abgelegten Bewegungsmuster. Jedes Bewegungsmuster kann in der Datenbank in unterschiedlichen Abtastraten (z.B. 1Hz, 10Hz, 20Hz, ...) vorliegen. Auf der Suche nach einem zu dem realen Bewegungsübergang korrespondierenden Bewegungsmustersegment werden zunächst die Versionen der Bewegungsmuster mit der niedrigsten Samplingraten durchsucht und danach die jeweils höhersampligen (z.b. mit 1Hz, danach 10Hz, etc.). Danach kann ein Abgleich von Zwischenschritten (Bewegungsübergängen) mit einer feineren Auflösung, d.h. Bewegungsmustern mit demgegenüber höheren zeitlichen Abtastraten, stattfinden.

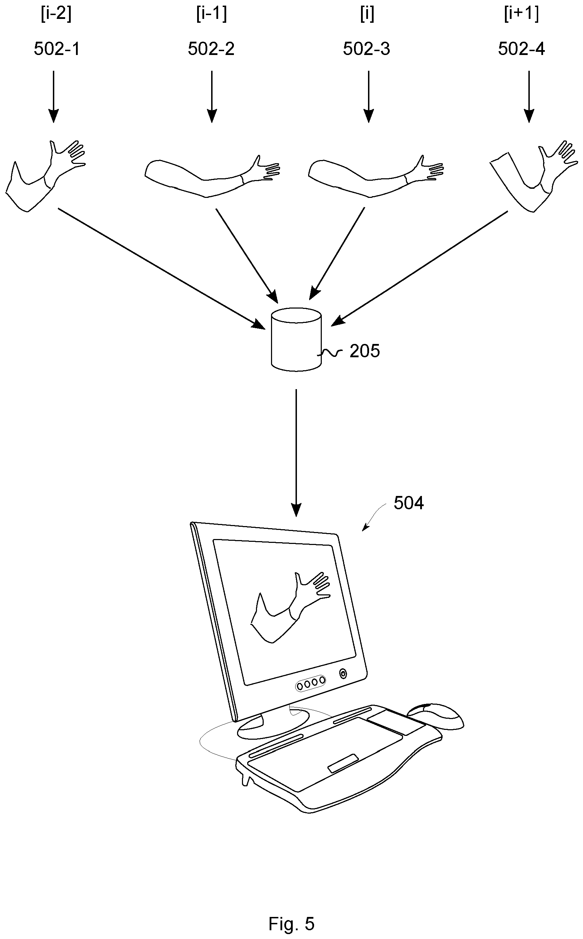

Hat die Auswahleinrichtung 204 bzw. die Matching-Unit eine Bewegung bzw. ein passendes Bewegungsmustersegment bzw. einen passenden Frame aus der Datenbank 205 identifiziert, kann der Frame bzw. das Bewegungsmustersegment aus der Datenbank entnommen und auf einer Anzeigevorrichtung abgebildet werden. Dies ist schematisch in der Fig. 5 dargestellt.

Die Fig.5 zeigt lediglich exemplarisch vier zeitlich aufeinanderfolgende Bewegungsübergänge 502-1, 502-2, 502-3 und 504-4 eines Objekts (hier: Arm eines Boxers), welche zu aufeinanderfolgenden Zeitintervallen *[i*-2], [*i-*1], [*i*] und [*i*+1] korrespondieren. Zu den dargestellten Bewegungsübergängen 502 werden über das hierin beschriebene Verfahren aus der Datenbank 205 möglichst passende Computermodellbewegungsmustersegmente ausgewählt, um die sich aus den detektierten Bewegungsübergängen 502 ergebende Gesamtbewegung des Objekts vermittels der in der Datenbank 205 gespeicherten Computermodellbewegungsmuster zu rekonstruieren bzw. synthetisieren und anschließend auf einer Ausgabe- bzw. Anzeigevorrichtung 504 wiederzugeben.

Im Falle normierter Bewegungsübergänge kann insbesondere ein passendes normiertes Computermodellbewegungsmustersegment aus der Datenbank 205 entnommen und mit einem vorher extrahierten Skalierungsfaktor und Körperschwerpunkt auf eine Zielgröße und -position abgebildet werden. Gemäß manchen Ausführungsbeispielen kann ein in der Datenbank 205 hinterlegtes Bewegungsmustersegment also (auf eine Einheitsgröße) normiert sein und zum Rekonstruieren des Abbilds mit einem einer Objektgröße entsprechenden Skalierungsfaktor beaufschlagt werden, um einen entnormierten Bewegungsablauf des Objekts mit der wenigstens einen Stützstelle zu rekonstruieren. Eine Ausrichtung bzw. Blickrichtung des Objekts kann dabei aus dem Bewegungsmuster, aus dem der Frame bzw. das Bewegungsmustersegment entnommen wurde, bekannt sein.

Zusammenfassend betreffen Ausführungsbeispiele ein Konzept, umfassend ein Verfahren, eine Vorrichtung und ein Computerprogramm, zur Bewegungsrekonstruktion (vorzugsweise in Echtzeit) von beweglichen und vielgliedrigen Objekten (z.B. Menschen, Tiere, mechanische Konstrukte) bzw. Objektverbünde auf Basis von Positionsmarkerdaten.

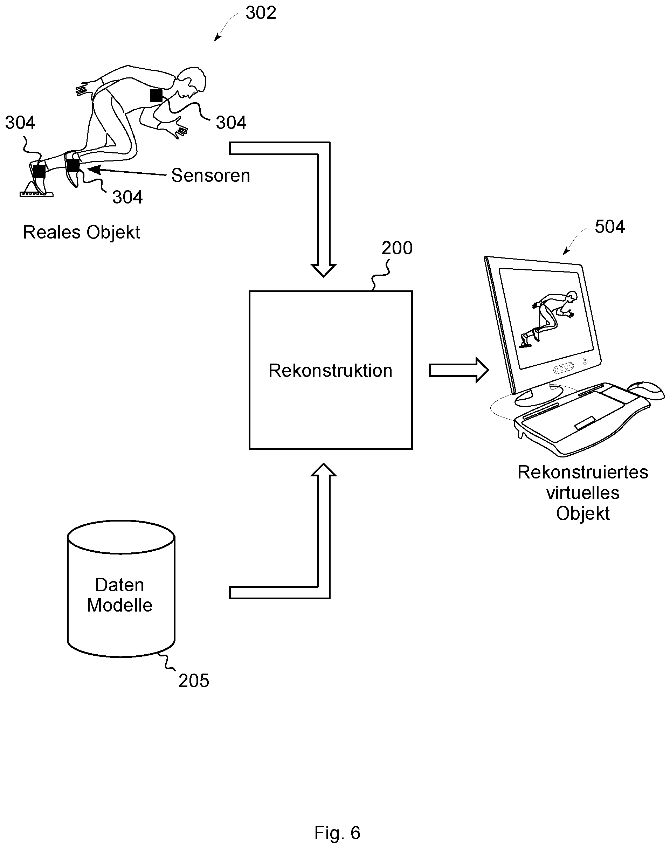

Wie in Fig. 6 gezeigt, können dazu an beliebigen Bewegungsstützstellen eines Objektes 302 funkbasierte Positionsmarker 304 angebracht werden. Es kann ein hinreichend genau auflösendes RTLS System vorgesehen sein, welches die Positionen der Funkmarker 304 vorzugsweise in Echtzeit beispielsweise in x, y, z ermittelt. Die Funkmarker 304 sind z.B. gegeben durch präzise RTLS (Real Time Location Systems) Daten, in Form von x, y, z Positionen im Raum und/oder Beschleunigungsdaten, etc. In einer sogenannten Bewegungsdatenbank 205 befindet sich eine beliebige Anzahl von Computermodellbewegungssamples. Es sind für das Objekt 302 beliebige und beliebig viele Computermodellbewegungsabschnitte gespeichert. Dies kann bei Menschen typische Bewegungen z.B. laufen, gehen, springen, etc, umfassen. Die Computermodellbewegungsabschnitte können eine Anzahl von Frames mit den Stützstellen der Funkmarker und dem gesamten Objekt enthalten. Dadurch ist durch eine Vorrichtung 200 zur Rekonstruktion der Bewegung des Objekts 302 aus einer Sequenz von gespeicherten Computermodellbewegungssamples des Objekts eine sinnvolle bzw. plausible Bewegungsrekonstruktion des Objekts möglich, auch wenn die Funkmarkerdaten unvollständig oder verrauscht sind. Die derart rekonstruierte Bewegung kann über die Ausgabe- bzw. Anzeigevorrichtung 504 angezeigt werden. Durch Ausführungsbeispiele lässt sich mit hinreichender Genauigkeit und Updaterate der Funkmarkerpositionen eine Rekonstruktion realer Bewegungen vermittels virtueller Objekte ermöglichen. Die Anzahl der Funkmarker 304 lässt sich nach oben beliebig variieren (mindestens einer, im Idealfall am Körperschwerpunkt). Die Rekonstruktion kann entweder in Echtzeit und/oder im Postproduktionsprozess erfolgen.

Die in der vorstehenden Beschreibung, den nachfolgenden Ansprüchen und in den Zeichnungen offenbarten Merkmale können sowohl einzeln als auch in beliebiger Kombination für die Verwirklichung der Erfindung in ihren verschiedenen Ausgestaltungen von Bedeutung sein.

Obwohl manche Aspekte der vorliegenden Erfindung im Zusammenhang mit einer Bewegungsrekonstruktionsvorrichtung beschrieben wurden, versteht es sich, dass diese Aspekte auch eine Beschreibung eines entsprechenden Bewegungsrekonstruktionsverfahrens darstellen, sodass ein Block oder ein Bauelement einer Bewegungsrekonstruktionsvorrichtung auch als ein entsprechender Verfahrensschritt oder als ein Merkmal eines Verfahrensschritts zu verstehen ist. Analog dazu stellen Aspekte, die im Zusammenhang mit einem oder als ein Verfahrensschritt beschrieben wurden, auch eine Beschreibung eines entsprechenden Blocks oder Details bzw. Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch ein Steuergerät, einen Prozessor, ein Computerprozessor (CPU = Central Processing Unit) einen Computer, ein Computersystem, einen anwendungsspezifischen integrierten Schaltkreis (ASIC = Application-specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbare Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch eine Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele präsentiert wurden, beschränkt ist.

## Patentansprüche

1. Verfahren (100) zur Rekonstruktion einer Bewegung eines Objekts (302) aus einer Sequenz von Bewegungsmustersegmenten eines 3D-Computermodells des Objekts, wobei jedes Bewegungsmustersegment einem unterschiedlichen Zeitintervall der Bewegung entspricht und wenigstens ein dem Zeitintervall entsprechendes Einzelbild eines Bewegungsmusters des 3D-Computermodells aufweist, und wobei das Objekt (302) wenigstens eine mit einem Funkmarker (304) gekoppelte Stützstelle aufweist, mit folgenden Schritten:
a) Erfassen (102) eines Bewegungsübergangs zwischen einem Anfangsbewegungszustand und einem Endbewegungszustand des Objekts (302) in einem Zeitintervall der Bewegung basierend auf von dem Funkmarker (304) empfangenen Positionsdaten der wenigstens einen Stützstelle;
b) Auswählen (104) zumindest eines zu dem Bewegungsübergang korrespondierenden digitalen Bewegungsmustersegments aus einer Mehrzahl von in einer Datenbank (205) hinterlegten digitalen Bewegungsmustern des 3D-Computermodells, derart, dass das ausgewählte digitale Bewegungsmustersegment für das 3D-Computermodell mit einer ausreichenden Wahrscheinlichkeit ausgehend von dem Anfangsbewegungszustand zu dem Endbewegungszustand für das Zeitintervall führt, wobei die in der Datenbank (205) hinterlegten Bewegungsmuster vordefinierte 3D-Bewegungsmuster des 3D-Computermodells sind, welche möglichen realen Bewegungen des Objekts entsprechen,
wobei beim Auswählen (104) die erfassten Bewegungsübergänge des Objekts (302) iterativ mit den hinterlegten digitalen Bewegungsmustern des 3D-Computermodells verglichen werden, derart, dass eine Hypothese für einen aktuellen Bewegungszustand des Objekts (302) basierend auf wenigstens einem vergangenen Bewegungszustand des Objekts (302) und einer aktuellen Übergangswahrscheinlichkeit, die einem möglichen Bewegungsübergang zwischen wenigstens zwei zeitlich aufeinander folgenden diskreten Bewegungszuständen des Objekts (302) entspricht, ermittelt wird, wobei der aktuelle Bewegungszustand und der wenigstens eine vergangene Bewegungszustand des Objekts (302) eine Sequenz eines Markov-Models (400) bilden,
wobei durch das Auswählen (104) des wenigstens einen Bewegungsmustersegments die wahrscheinlichste Sequenz von Bewegungszuständen bei einem vorbestimmten Markov-Model (400) und einer erfassten Sequenz von Bewegungsübergängen ermittelt wird, um die Bewegung des Objekts (302) zu rekonstruieren; und
c) Rekonstruieren (106) eines Abbilds der Bewegung des Objekts für das Zeitintervall auf einem Display mittels des 3D-Computermodells unter Verwendung des Anfangsbewegungszustands und des ausgewählten Bewegungsmustersegments des 3D-Computermodells.

2. Verfahren (100) nach Anspruch 1, wobei die Verfahrensschritte a) bis c) eine aktuelle Iteration eines iterativen Verfahrens zur Rekonstruktion der Bewegung bilden, und wobei der Anfangsbewegungszustand für die aktuelle Iteration in einer vorhergehenden Iteration des iterativen Verfahrens (100) rekonstruiert wurde, so dass sich das rekonstruierte Abbild der Bewegung aus einer Mehrzahl von ausgewählten und aufeinanderfolgenden Zeitintervallen oder Iterationen entsprechenden digitalen Bewegungsmustersegmenten zusammensetzt.

3. Verfahren (100) nach einem der vorhergehenden Ansprüche, wobei beim Auswählen (104) des digitalen Bewegungsmustersegments nach einer vorbestimmten Zeitdauer nach dem Erfassen (102) des Bewegungsübergangs ein digitales Bewegungsmustersegment ausgewählt wird, welches nach dieser Zeitdauer mit der höchsten Wahrscheinlichkeit ausgehend von dem Anfangsbewegungszustand zu dem Endbewegungszustand für das Zeitintervall führt.

4. Verfahren (100) nach einem der vorhergehenden Ansprüche, wobei die in der Datenbank (205) hinterlegten digitalen Bewegungsmuster normiert sind, und wobei zum Auswählen des digitalen Bewegungsmustersegments die vom Funkmarker (304) empfangenen Positionsdaten mit einem einer Objektgröße entsprechenden Skalierungsfaktor beaufschlagt werden, um eine normierte Bewegung des Objekts (302) zu erhalten.

5. Verfahren (100) nach einem der vorhergehenden Ansprüche, wobei das Bewegungsmustersegment normiert ist und zum Rekonstruieren (106) des Abbilds mit einem einer Objektgröße entsprechenden Skalierungsfaktor beaufschlagt wird, um einen entnormierten Bewegungsablauf des Objekts (302) mit der wenigstens einen Stützstelle zu rekonstruieren.

6. Verfahren (100) nach einem der vorhergehenden Ansprüche, wobei bis zu einem ersten Zeitpunkt nach einem Empfangen der Positionsdaten das digitale Bewegungsmustersegment aus der Mehrzahl der hinterlegten digitalen Bewegungsmuster ausgewählt wird, welches zu diesem ersten Zeitpunkt mit der höchsten Wahrscheinlichkeit der erfassten Bewegung des Objekts (302) entspricht, und wobei nach dem ersten Zeitpunkt bis zu einem zweiten Zeitpunkt weiter nach einem besser passenden digitalen Bewegungsmustersegment für das Zeitintervall gesucht wird.

7. Verfahren (100) nach einem der vorhergehenden Ansprüche, wobei unterschiedlichen Stützstellen des Objekts (302) unterschiedliche Prioritäten zugewiesen werden und Positionsdaten von höher priorisierten Stützstellen zeitlich eher ausgewertet werden als Positionsdaten von niedriger priorisierten Stützstellen.

8. Verfahren (100) nach einem der vorhergehenden Ansprüche, wobei einem größeren Objekt (302) eine höhere Priorität zugewiesen wird als einem demgegenüber kleineren Objekt (302) und wobei Positionsdaten von höher priorisierten Objekten zeitlich eher ausgewertet werden als Positionsdaten von niedriger priorisierten Objekten.

9. Vorrichtung (200) zur Rekonstruktion einer Bewegung eines Objekts (302) aus einer Sequenz von Bewegungsmustersegmenten eines 3D-Computermodells des Objekts, wobei jedes Bewegungsmustersegment einem unterschiedlichen Zeitintervall der Bewegung entspricht und wenigstens ein dem Zeitintervall entsprechendes Einzelbild eines Bewegungsmusters des 3D-Computermodells aufweist, und wobei das Objekt wenigstens eine mit einem Funkmarker (304) gekoppelte Stützstelle aufweist, mit folgenden Merkmalen:
einer Datenbank (205) zum Speichern einer Mehrzahl von digitalen Bewegungsmustern des 3D-Computermodells, wobei die in der Datenbank (205) gespeicherten Bewegungsmuster vordefinierte 3D-Bewegungsmuster des 3D-Computermodells sind, welche möglichen realen Bewegungen des Objekts entsprechen; einer Einrichtung (202) zum Erfassen eines Bewegungsübergangs zwischen einem Anfangsbewegungszustand und einem Endbewegungszustand des Objekts (302) in einem Zeitintervall der Bewegung basierend auf von dem Funkmarker (304) empfangenen Positionsdaten der wenigstens einen Stützstelle;
einer Einrichtung (204) zum Auswählen zumindest eines zu dem Bewegungsübergang korrespondierenden digitalen Bewegungsmustersegments aus der Mehrzahl von in der Datenbank (205) gespeicherten digitalen Bewegungsmustern des 3D-Computermodells, wobei das ausgewählte digitale Bewegungsmustersegment für das 3D-Computermodell mit einer ausreichenden Wahrscheinlichkeit ausgehend von dem Anfangsbewegungszustand zu dem Endbewegungszustand für das Zeitintervall führt,
wobei die Einrichtung (204) zum Auswählen ausgebildet ist, um beim Auswählen (104) die erfassten Bewegungsübergänge des Objekts (302) iterativ mit den in der Datenbank (205) gespeicherten digitalen Bewegungsmustern des 3D-Computermodells zu vergleichen, derart, dass eine Hypothese für einen aktuellen Bewegungszustand des Objekts (302) basierend auf wenigstens einem vergangenen Bewegungszustand des Objekts (302) und einer aktuellen Übergangswahrscheinlichkeit, die einem möglichen Bewegungsübergang zwischen wenigstens zwei zeitlich aufeinander folgenden diskreten Bewegungszuständen des Objekts (302) entspricht, ermittelt wird, wobei der aktuelle Bewegungszustand und der wenigstens eine vergangene Bewegungszustand des Objekts (302) eine Sequenz eines Markov-Models (400) bilden,
wobei die Einrichtung (204) zum Auswählen ausgebildet ist, um durch das Auswählen (104) des wenigstens einen Bewegungsmustersegments die wahrscheinlichste Sequenz von Bewegungszuständen bei einem vorbestimmten Markov-Model (400) und einer erfassten Sequenz von Bewegungsübergängen zu ermitteln, um die Bewegung des Objekts (302) zu rekonstruieren; und
einer Einrichtung (206) mit einem Display zum Rekonstruieren eines Abbilds der Bewegung des Objekts (302) für das Zeitintervall auf dem Display mittels des 3D-Computermodells unter Verwendung des Anfangsbewegungszustands und des ausgewählten Bewegungsmustersegments des 3D-Computermodells.

## Claims

1. A method (100) for reconstructing a movement of an object (302) from a sequence of movement pattern segments of a 3D computer model of the object, wherein every movement pattern segment corresponds to a different time interval of the movement and comprises at least one individual image of a movement pattern of the 3D computer model corresponding to the time interval, and wherein the object (302) comprises at least one supporting point coupled to a radio marker (304), comprising:
a) detecting (102) a movement transition between an initial movement state and a final movement state of the object (302) in a time interval of the movement based on the position data of the at least one supporting point received from the radio marker (304);
b) selecting (104) at least one digital movement pattern segment from a plurality of digital movement patterns of the 3D computer model stored in a database (205) which corresponds to the movement transition, such that the selected digital movement pattern segment for the 3D computer model leads starting from the initial movement state to the final movement state for the time interval with a sufficient probability, wherein the movement patterns stored in the database (205) are pre-defined 3D movement patterns of the 3D computer model which correspond to possible real movements of the object,
wherein when selecting (104) the detected movement transitions of the object (302) an iterative comparison with the stored movement patterns of the 3D computer model is executed such that a hypothesis for a current movement state of the object (302) is determined based on at least one past movement state of the object (302) and a current transition probability which corresponds to one possible movement transition between at least two temporally successive discrete movement states of the object (302), wherein the current movement state and the at least one past movement state of the object (302) form a sequence of a Markov model (400),
wherein by selecting (104) the at least one movement pattern segment the most probable sequence of movement states with a pre-determined Markov model (400) and a detected sequence of movement transitions is determined in order to reconstruct the movement of the object (302); and
c) reconstructing (106) a processed image of the movement of the object for the time interval on a display by means of the 3D computer model using the initial movement state and the selected movement pattern segment of the 3D computer model.

2. The method (100) according to claim 1, wherein the method acts a) to c) form a current iteration of an iterative method for reconstructing the movement and wherein the initial movement state for the current iteration was reconstructed in a preceding iteration of the iterative method (100) so that the reconstructed image of the movement is put together from a plurality of digital movement pattern segments corresponding to selected and successive time intervals or iterations.

3. The method (100) according to any of the previous claims, wherein when selecting (104) the digital movement pattern segment after a pre-determined time period after detecting (102) the movement transition a digital movement pattern segment is selected which after this time period leads with the highest probability to the final movement state for the time interval starting from the initial movement state.

4. The method (100) according to any of the previous claims, wherein the digital movement patterns stored in the database (205) are normalized and wherein for selecting the digital movement pattern segment the position data received from the radio marker (304) are subjected to a scaling factor corresponding to an object size in order to acquire a normalized movement of the object (302).

5. The method (100) according to any of the previous claims, wherein the movement pattern segment is normalized and is subjected to a scaling factor corresponding to the object size for reconstructing (106) the processed image to reconstruct a de-normalized movement sequence of the object (302) with the at least one supporting point.

6. The method (100) according to any of the previous claims, wherein up to a first time instant after receiving the position data the digital movement pattern segment is selected from the plurality of stored digital movement patterns which corresponds to the detected movement of the object (302) with the highest probability at this first time instant, and wherein after the first time instant up to a second time instant search for a better suitable digital movement pattern segment for the time interval is continued.

7. The method (100) according to any of the previous claims, wherein different priorities are allocated to different supporting points of the object (302) and position data of supporting points of higher priority are evaluated earlier than position data of supporting points of lower priority.

8. The method (100) according to any of the previous claims, wherein a larger object (302) is allocated a higher priority than a comparatively smaller object (302) and wherein position data of objects of higher priority are evaluated earlier than position data of objects of lower priority.

9. An apparatus (200) for reconstructing a movement of an object (302) from a sequence of movement pattern segments of a 3D computer model of the object, wherein every movement pattern segment corresponds to a different time interval of the movement and comprises at least one individual image of a movement pattern of the 3D computer model corresponding to the time interval, and wherein the object comprises at least one supporting point coupled to a radio marker (304), comprising:
a database (205) for storing a plurality of digital movement patterns of the 3D computer model, wherein the movement patterns stored in the database (205) are pre-defined 3D movement patterns of the 3D computer model which correspond to possible real movements of the object;
a device (202) for detecting a movement transition between an initial movement state and a final movement state of the object (302) in a time interval of the movement based on the position data of the at least one supporting point received from the radio marker (304);
a device (204) for selecting at least one digital movement pattern segment from the plurality of digital movement patterns of the 3D computer model stored in a database (205) which corresponds to the movement transition, wherein the selected digital movement pattern segment for the 3D computer model leads starting from the initial movement state to the final movement state with a sufficient probability for the time interval,
wherein the device (204) for selecting is configured, when selecting (104), to iteratively compare the detected movement transitions of the object (302) to the digital movement patterns of the 3D computer model stored in the database (205) such that a hypothesis for a current movement state of the object (302) is determined based on at least one past movement state of the object (302) and a current transition probability which corresponds to one possible movement transition between at least two temporally successive discrete movement states of the object (302), wherein the current movement state and the at least one past movement state of the object (302) form a sequence of a Markov model (400),
wherein the device (204) for selecting is configured to determine, by selecting (104) the at least one movement pattern segment, the most probable sequence of movement states with a pre-determined Markov model (400) and a detected sequence of movement transitions, to reconstruct the movement of the object (302); and
a device (206) with a display for reconstructing a processed image of movement of the object (302) for the time interval on the display by means of the 3D computer model using the initial movement state and the selected movement pattern segment of the 3D computer model.

## Revendications

1. Procédé (100) de reconstruction d'un mouvement d'un objet (302) à partir d'une séquence de segments de modèle de mouvement d'un modèle informatique 3D de l'objet, chaque segment de modèle de mouvement correspondant à un intervalle de temps différent du mouvement et possédant au moins une image individuelle correspondant à l'intervalle de temps d'un modèle de mouvement du modèle informatique 3D, et l'objet (302) possédant au moins un point de référence couplé à une balise radioélectrique (304), comprenant les étapes suivantes :
a) détection (102) d'une transition de mouvement entre un état de mouvement initial et état de mouvement final de l'objet (302) dans un intervalle de temps du mouvement en se basant sur des données de position de l'au moins un point de référence reçues par la balise radioélectrique (304) ;
b) sélection (104) d'au moins un segment de modèle de mouvement numérique correspondant à la transition de mouvement parmi une pluralité de modèles de mouvement numériques du modèle informatique 3D stockés dans une base de données (205) de telle sorte que le segment de modèle de mouvement numérique sélectionné pour le modèle informatique 3D mène, avec une probabilité suffisante, à l'état de mouvement final en partant de l'état de mouvement initial pendant l'intervalle de temps, les modèles de mouvement stockés dans la base de données (205) étant des modèles de mouvement 3D prédéfinis du modèle informatique 3D qui correspondent aux mouvements réels possibles de l'objet,
les transitions de mouvement détectées de l'objet (302) étant comparées de manière itérative avec les modèles de mouvement numériques stockés du modèle informatique 3D lors de la sélection (104) de manière à déterminer une hypothèse pour un état de mouvement actuel de l'objet (302) en se basant sur au moins un état de mouvement passé de l'objet (302) et une probabilité de transition actuelle qui correspond à une transition de mouvement possible entre au moins deux états de mouvement discrets chronologiquement successifs de l'objet (302), l'état de mouvement actuel et l'au moins un état de mouvement passé de l'objet (302) formant une séquence d'un modèle de Markov (400),
la séquence la plus probable d'états de mouvement avec un modèle de Markov (400) prédéfini et une séquence détectée de transitions de mouvement étant déterminée par la sélection (104) de l'au moins un segment de modèle de mouvement afin de reconstruire le mouvement de l'objet (302) ; et
c) reconstruction (106) d'une représentation du mouvement de l'objet pendant l'intervalle de temps sur un écran d'affichage au moyen du modèle informatique 3D en utilisant l'état de mouvement initial et le segment de modèle de mouvement sélectionné du modèle informatique 3D.

2. Procédé (100) selon la revendication 1, les étapes a) à c) formant une itération actuelle d'un procédé itératif destiné à la reconstruction du mouvement, et l'état de mouvement initial pour l'itération actuelle ayant été reconstruit dans une itération précédente du procédé (100) itératif, de telle sorte que la représentation reconstruite du mouvement se compose d'une pluralité de segments de modèle de mouvement numériques sélectionnés et correspondants à des intervalles de temps ou des itérations successifs.

3. Procédé (100) selon l'une des revendications précédentes, un segment de modèle de mouvement numérique étant sélectionné lors de la sélection (104) du segment de modèle de mouvement numérique après une durée prédéfinie après la détection (102) de la transition de mouvement, lequel, après cette durée, mène avec la probabilité la plus élevée à l'état de mouvement final en partant de l'état de mouvement initial pendant l'intervalle de temps.

4. Procédé (100) selon l'une des revendications précédentes, les modèles de mouvement numériques stockés dans la base de données (205) étant normalisés et, en vue de sélectionner le segment de modèle de mouvement numérique, les données de position reçues par la balise radioélectrique (304) étant soumises à un facteur d'échelle correspondant à la taille de l'objet afin d'obtenir un mouvement normalisé de l'objet (302).

5. Procédé (100) selon l'une des revendications précédentes, le segment de modèle de mouvement étant normalisé et, en vue de la reconstruction (106) de la représentation, étant soumis à un facteur d'échelle correspondant à la taille de l'objet afin de reconstruire un déroulement dénormalisé du mouvement de l'objet (302) avec l'au moins un point de référence.

6. Procédé (100) selon l'une des revendications précédentes, jusqu'à un premier instant après une réception des données de position, le segment de modèle de mouvement numérique sélectionné à partir de la pluralité de modèles de mouvement numériques stockés étant celui qui, à ce premier instant, correspond avec la probabilité la plus élevée au mouvement détecté de l'objet (302), et la recherche d'un segment de modèle de mouvement numérique mieux adapté pour l'intervalle de temps se poursuivant après le premier instant jusqu'à un deuxième instant.

7. Procédé (100) selon l'une des revendications précédentes, des priorités différentes étant attribuées à des points de référence différents de l'objet (302) et des données de position de points de référence ayant la priorité la plus élevée étant interprétées plus tôt dans le temps que les données de position de points de référence ayant une priorité plus faible.

8. Procédé (100) selon l'une des revendications précédentes, une priorité plus élevée étant attribuée à un objet (302) plus grand qu'à un objet (302) plus petit par rapport à celui-ci et des données de position d'objets ayant une priorité plus élevée étant interprétées plus tôt dans le temps que des données de position d'objets ayant une priorité plus faible.

9. Dispositif (200) de reconstruction d'un mouvement d'un objet (302) à partir d'une séquence de segments de modèle de mouvement d'un modèle informatique 3D de l'objet, chaque segment de modèle de mouvement correspondant à un intervalle de temps différent du mouvement et possédant au moins une image individuelle correspondant à l'intervalle de temps d'un modèle de mouvement du modèle informatique 3D, et l'objet possédant au moins un point de référence couplé à une balise radioélectrique (304), possédant les caractéristiques suivantes :
une base de données (205) destinée à enregistrer une pluralité de modèles de mouvement numériques du modèle informatique 3D, les modèles de mouvement enregistrés dans la base de données (205) étant des modèles de mouvement 3D prédéfinis du modèle informatique 3D qui correspondent aux mouvements réels possibles de l'objet ;
un dispositif (202) destiné à détecter une transition de mouvement entre un état de mouvement initial et état de mouvement final de l'objet (302) dans un intervalle de temps du mouvement en se basant sur des données de position de l'au moins un point de référence reçues par la balise radioélectrique (304) ;
un dispositif (204) destiné à sélectionner au moins un segment de modèle de mouvement numérique correspondant à la transition de mouvement parmi la pluralité de modèles de mouvement numériques du modèle informatique 3D enregistrés dans la base de données (205), le segment de modèle de mouvement numérique sélectionné pour le modèle informatique 3D menant, avec une probabilité suffisante, à l'état de mouvement final en partant de l'état de mouvement initial pendant l'intervalle de temps,
le dispositif (204) de sélection étant configuré pour, lors de la sélection (104), comparer de manière itérative les transitions de mouvement détectées de l'objet (302) avec les modèles de mouvement numériques du modèle informatique 3D enregistrés dans la base de données (205) de manière à déterminer une hypothèse pour un état de mouvement actuel de l'objet (302) en se basant sur au moins un état de mouvement passé de l'objet (302) et une probabilité de transition actuelle qui correspond à une transition de mouvement possible entre au moins deux états de mouvement discrets chronologiquement successifs de l'objet (302), l'état de mouvement actuel et l'au moins un état de mouvement passé de l'objet (302) formant une séquence d'un modèle de Markov (400),
le dispositif (204) de sélection étant configuré pour déterminer, par la sélection (104) de l'au moins un segment de modèle de mouvement, la séquence la plus probable d'états de mouvement avec un modèle de Markov (400) prédéfini et une séquence détectée de transitions de mouvement afin de reconstruire le mouvement de l'objet (302) ; et
un dispositif (206) comprenant un écran d'affichage destiné à reconstruire une représentation du mouvement de l'objet (302) pendant l'intervalle de temps sur l'écran d'affichage au moyen du modèle informatique 3D en utilisant l'état de mouvement initial et le segment de modèle de mouvement sélectionné du modèle informatique 3D.
